(19) Europäisches Patentamt
European Patent Office
Office européen des brevets

(11) **EP 3 956 045 B1**

(12) **EUROPÄISCHE PATENTSCHRIFT**

(45) Veröffentlichungstag und Bekanntmachung des Hinweises auf die Patenterteilung:
**17.12.2025   Patentblatt 2025/51**

(21) Anmeldenummer: **20711788.8**

(22) Anmeldetag: **26.02.2020**

(51) Internationale Patentklassifikation (IPC):
**B01D 11/02** *(2006.01)*        **A23F 3/18** *(2006.01)*
**A23F 3/42** *(2006.01)*

(52) Gemeinsame Patentklassifikation (CPC):
**B01D 11/0207; A23F 3/18; A23F 3/423; B01D 11/0219; B01D 11/0253; B01D 11/0269; B01D 11/0273; B01D 11/028**

(86) Internationale Anmeldenummer:
**PCT/EP2020/000051**

(87) Internationale Veröffentlichungsnummer:
**WO 2020/211972 (22.10.2020 Gazette 2020/43)**

(54) **VERFAHREN UND VORRICHTUNG ZUR INDUSTRIELLEN HERSTELLUNG EINES EXTRAKTES DURCH FEST-FLÜSSIG-EXTRAKTION**

METHOD AND APPARATUS FOR INDUSTRIAL PRODUCTION OF AN EXTRACT BY SOLID-LIQUID EXTRACTION

PROCÉDÉ ET DISPOSITIF DE FABRICATION INDUSTRIELLE D'UN EXTRAIT PAR EXTRACTION SOLIDE-LIQUIDE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität:  **17.04.2019   DE 102019002807**

(43) Veröffentlichungstag der Anmeldung:
**23.02.2022   Patentblatt 2022/08**

(73) Patentinhaber: **GEA TDS GmbH**
**31157 Sarstedt (DE)**

(72) Erfinder:
• **O'GORMAN, Colm**
**Royston, Hertfordshire SG8 5AQ (GB)**
• **ROLLE, Ulrich**
**48351 Everswinkel (DE)**
• **LEAL CARCIA, Maria Carmen**
**48149 Münster (DE)**
• **TACKE, Ludger**
**46342 Velen (DE)**
• **HELMS, Franz-Josef**
**31157 Sarstedt (DE)**

(74) Vertreter: **Hauck Patent- und Rechtsanwälte PartmbB**
**Postfach 11 31 53**
**20431 Hamburg (DE)**

(56) Entgegenhaltungen:
| | |
|---|---|
| EP-A1- 2 837 290 | EP-A1- 2 837 290 |
| EP-A1- 2 837 290 | CN-A- 106 563 288 |
| CN-A- 106 563 288 | CN-A- 106 563 288 |
| CN-A- 108 654 137 | CN-A- 108 654 137 |
| CN-A- 108 654 137 | CN-U- 207 532 831 |
| CN-U- 207 532 831 | CN-U- 207 532 831 |
| CN-U- 208 115 208 | CN-U- 208 115 208 |
| CN-U- 208 115 208 | DE-A1- 102013 022 271 |
| DE-A1- 102013 022 271 | DE-A1- 102013 022 271 |
| NO-B1- 308 939 | NO-B1- 308 939 |
| NO-B1- 308 939 | US-A- 5 153 015 |
| US-A- 5 153 015 | |

**Beschreibung**

TECHNISCHES GEBIET

Die Erfindung betrifft ein Verfahren und eine Vorrichtung zur industriellen Herstellung eines Extraktes durch Fest-Flüssig-Extraktion, vorzugsweise durch Fest-Flüssig-Heißextraktion und insbesondere für großtechnische Anwendungen, mittels eines Extraktionsbehälters, bei dem ein im Extraktionsbehälter befindliches sekundäres Lösungsmittel und ein primäres Gemisch, bestehend aus einem festen, primären Lösungsmittel und einer Übergangskomponente, zur Gewinnung des Extraktes für eine vorbestimmte Verweilzeit miteinander in Kontakt gebracht werden. Dabei ist das primäre Gemisch in wenigstens einem flüssigkeitsdurchlässigen Behältnis innerhalb des Extraktionsbehälters eingeschlossen. Das primäre Gemisch wird mit einer vorbestimmten zweiten Masse in das im Extraktionsbehälter befindliche Behältnis eingebracht, der Extraktionsbehälter wird mit einer vorbestimmten ersten Masse des sekundären Lösungsmittels befüllt und nach der Verweilzeit werden der gewonnene Extrakt und ein komplementärer Anteil Raffinat voneinander getrennt. Ein von Raffinat mit Restfeuchte befreiter Extrakt wird aus dem Extraktionsbehälter abgeführt. Dem Raffinat mit Restfeuchte wird die aus Extrakt bestehende Restfeuchte durch Entfeuchten mittels mechanischen Verpressens in dem Behältnis wenigstens teilweise entzogen und dem Extrakt zugeführt. Mit der vorgeschlagenen Erfindung soll insbesondere die großtechnische industrielle Herstellung eines Teekonzentrats, das verfahrenstechnisch und technologisch auf der vorgenannten Fest-Flüssig-Heißextraktion beruht und bei dem Teerohstoff, beispielsweise Teeblätter, Blüten, Halme, Körner, Samen, Wurzeln oder andere Pflanzenbestandteile, und Heißwasser oder kochendes Wasser miteinander in Kontakt gebracht werden, ermöglicht werden.

STAND DER TECHNIK

Verfahren der traditionellen Teeherstellung sind hinlänglich bekannt, sie eignen sich jedoch nicht oder nur bedingt für eine industrielle oder semiindustrielle Herstellung eines Teekonzentrates oder eines Teegetränkes in großtechnischem Maßstab, weil sie aufgrund der physikalischen Gegebenheiten an ihre Grenzen stoßen.

Die gattungsbildenden Merkmale des erfindungsgemäßen Verfahrens sind in der WO 2011/046 745 A1 offenbart. Diese beschreibt ein Brühsystem und ein Verfahren zum Aufbrühen von Tee und insbesondere ein System und ein Verfahren zum Aufbrühen von hochkonzentriertem Tee. Das Brühsystem umfasst in einer Teebrühkanne eine fest angeordnete Brühkammer, der eine Dosis Teeblätter und Heißwasser aus einer Heißwasserquelle zugeführt werden. Die Brühkammer kann als untere Begrenzung einen Kolben enthalten, der innerhalb der Brühkammer auf- und abwärts bewegt werden kann und eine weitgehende wasserdichte Abdichtung gegenüber der Brühkammer aufweist. Nach einer vorbestimmten Verweilzeit wird der gewonnene Teeextrakt durch Aufwärtsbewegung des Kolbens aus der Brühkammer verdrängt und gegebenenfalls über einen im Kopfbereich der Brühkammer angeordneten Filter abgeführt. Die in der Brühkammer verbleibenden extrahierten Teeblätter mit Restfeuchte können durch weitere Aufwärtsbewegung des Kolbens verdichtet und der dadurch gewonnene Extrakt kann dem bereits abgeführten Extrakt zugeführt werden. Durch Öffnen der Brühkammer und weitere Aufwärtsbewegung des Kolbens können die komprimierten Teeblätter aus der Brühkammer ausgeschoben werden.

Wesentliche Merkmale zur industriellen Gewinnung einer Teelösung, wie sie einleitend genannt werden, sind aus der EP 2 837 290 A1 bekannt. Es wird dort vorgeschlagen, dass man in einem ersten Verfahrensschritt die Teerohstoffe für eine vorbestimmte Verweilzeit in einer stehenden Flüssigkeit und in einem zweiten Verfahrensschritt mit einer anderen strömenden Flüssigkeit in Kontakt bringt. Nach einer vorteilhaften Ausgestaltung des Verfahrens wird nach Ablauf der Verweilzeit die Teelösung abgeführt und beim Abführen der Teelösung wird gleichzeitig eine vorbestimmte Menge einer Flüssigkeit dem Teerohstoff im Durchfluss zugeführt. Die Durchführung des vorbeschriebenen Verfahrens erfolgt in einem Behältnis, wobei nach der Entleerung des Behältnisses die an dem dort verbleibenden extrahierten Teerohstoff anhaftende Flüssigkeit durch Druckstöße mit Gas gelöst wird.

In der DE 699 29 220 T2 oder PCT/US99/23178 ist ein Verfahren zum Extrahieren eines verzehrbaren Materials aus einem festen Rohmaterial, beispielsweise Kaffee oder Tee, beschrieben. Das feste Rohmaterial ist dabei in einem umschlossenen Volumen eines Behälters, beispielsweise in Form eines Bettes, ausgebildet. Dem umschlossenen Volumen und der Menge an festem Rohmaterial werden ein Volumen an wässrigem Lösungsmittel zugeführt. Die Extraktion erfolgt unter Ausübung von Druck, wobei das Lösungsmittel Wasser ist, das eine Temperatur hat, die Raumtemperatur übersteigt und vorzugsweise zwischen ungefähr 88 und ungefähr 100 Grad Celsius beträgt. Das Wasser durchströmt das feste Rohmaterial und der dabei erzeugte wässrige Extrakt wird aus dem Behälter abgeführt.

Die CN 20 753 283 U offenbart einen Extraktionsreaktor mit wenigstens einem auspressbaren Behälter. Dieser Behälter ist flexibel und mit einer Pressplatte oben und einer Filterplatte unten ausgestattet, um den Inhalt zu verpressen. Der Extraktionsreaktor hat einen Zulauf für das Extraktionsmittel und einen Ablauf, welcher eine Umlaufleitung mit einer Zirkulationspumpe aufweist. Es ist weiterhin eine einfache Steuerungseinheit offenbar, mit der ein Motor für eine Rührwelle, eine elektrische Teleskopstange für die zugeordnete Pressplatte oben und die Zirkulationspumpe elektrisch versorgt, angesteuert und betrieben werden. Der auspressbare Behälter kann über Düsen mit dem im Extraktionsreaktor befindlichen Extraktionsmittel oder dem durch Extraktion gewonnenen Gemisch zur Intensivierung des Stoffaustausches von unten beschwallt werden. Beim Pressen des Behälters verbleibt die Filterplatte unten in ihrer stationären Lage während die Pressplatte oben mittels der zugeordneten Teleskopstange gegen die Filterplatte unten verschoben wird.

In der NO 308 939 B1 ist ein Prozesstank zur schonenden Behandlung von organischem Material, unter anderem zur Extraktion von Pflanzenmaterialien beschrieben. Ein perforierter Innentank ist drehbar in einem undurchlässigen Außentank gelagert. Auf der Außenseite des Innentanks und auf der Innenseite des Außentanks sind Schaufeln angeordnet, wodurch bei einer Zusammenarbeit zwischen diesen Schaufeln ein Rühren der Flüssigkeit im Prozesstank erfolgt. Die Oberseite des Innentanks ist durch einen absenkbaren Deckel begrenzt, wodurch das Rückstandsmaterial im Innentank komprimiert werden kann.

CN 108654137 A beschreibt ein Extraktionsverfahren für natürliches rotes Pigment. Eine Extraktionsvorrichtung umfasst eine Box, in der ein nach oben offener Hohlraum befestigt ist, ein Antriebshohlraum in kommunizierender Weise in der unteren Endwand des offenen Hohlraums ausgebildet ist, ein Antriebsrotationsmotor in der unteren Endwand des Antriebshohlraums befestigt ist, ein Antriebszahnrad an der oberen Innenfläche einer Ausgangswelle des Antriebsrotationsmoduls befestigt ist, die linke Seite des Antriebszahnrads mit einem angetriebenen Zahnrad in Eingriff steht, eine Drehwelle in dem angetriebenen Zahnrad befestigt und mit der unteren Endwand des Antriebshohlraums in gleitender Passung verbunden ist, eine Drehplatte an der oberen Endfläche der Drehwelle befestigt ist und bilateral symmetrische und vertikal durchgehende Rollnuten in der Drehplatte befestigt sind.

CN 106563288 A beschreibt einen Extraktionstank für Nährstoffbestandteile mit einem Isolierfass und einer Einsteckverbindung sowie einer Führungsnut. Der Nährstoffextraktionstank umfasst einen Tankkörper und eine Rührvorrichtung, wobei die Rührvorrichtung einen Stützrahmen, einen Motor, eine Rührwelle und Isolierfässer umfasst.

Aus US 5153015 A sind ein Verfahren und eine Vorrichtung zur Extraktion von Inhaltsstoffen aus blättrigen Naturprodukten mittels eines Gases, insbesondere zur Entkoffeinierung von Teeblättern mittels $CO_2$, bekannt, wobei anschließend das Koffein an einen Adsorbenten, vorzugsweise Aktivkohle, gebunden wird. Dabei ist vorgesehen, dass das Gas durch eine Schicht des Naturproduktes mit steigender Geschwindigkeit innerhalb der Naturproduktschicht geführt wird. Hierdurch sollen die notwendige Behandlungszeit der zu behandelnden blättrigen Naturprodukte verringert, die vom Gas durchströmten Wege verkürzt und damit die Gefahr von Verunreinigungen verhindert und insbesondere die insgesamt aufgeprägte Gasströmungsgeschwindigkeit verringert werden.

Ausgehend von dem vorgenannten Stand der Technik ist es Aufgabe der vorliegenden Erfindung, vorzugsweise für großtechnische industrielle Anwendungen, ein Verfahren zur Herstellung eines Extraktes durch Fest-Flüssig-Extraktion, insbesondere Fest-Flüssig-Heißextraktion, und eine Vorrichtung zur Durchführung des Verfahrens zu schaffen, die einerseits den Stoffaustausch bei der Extraktion gegenüber Lösungen nach dem Stand der Technik verbessern und die andererseits eine weiter verbesserte Entfeuchtung eines Raffinats mit Restfeuchte zur Gewinnung weiteren besonders wertvollen Extrakts ermöglichen.

## ZUSAMMENFASSUNG DER ERFINDUNG

Diese Aufgabe wird durch ein Verfahren mit den Merkmalen des Anspruchs 1 gelöst. Vorteilhafte Ausgestaltungen des erfindungsgemäßen Verfahrens sind Gegenstand der zugeordneten Unteransprüche. Eine Vorrichtung zur Durchführung des Verfahrens ist Gegenstand des nebengeordneten Anspruchs 9. Vorteilhafte Ausführungsformen der erfindungsgemäßen Vorrichtungen sind in den zugeordneten Unteransprüchen beschrieben. Eine Verwendung eines Behältnisses in einer Vorrichtung ist Gegenstand der Ansprüche 18 bis 20. Eine Verwendung des Verfahrens oder der Vorrichtung jeweils zur Herstellung eines Teekonzentrats ist Gegenstand des Anspruchs 21.

Nachfolgend wird parallel zu den Begrifflichkeiten für die allgemeine Anwendung des erfindungsgemäßen Verfahrens auf die spezielle Herstellung eines Teekonzentrates mittels des erfindungsgemäßen Verfahrens Bezug genommen, wobei die adäquaten Begriffe für die spezielle Herstellung jeweils in eckige Klammern und kursiv gesetzt sind.

Die Erfindung geht verfahrenstechnisch aus von einem Verfahren zur Herstellung eines Extraktes [*Teekonzentrat*] durch Fest-Flüssig-Extraktion mittels eines Extraktionsbehälters. Hierbei werden ein sekundäres Lösungsmittel [*Heißwasser oder kochendes Wasser;* nachfolgend steht Heißwasser immer auch für kochendes Wasser] und ein primäres Gemisch [*Teeblätter oder Teerohstoff;* nachfolgend stehen Teeblätter immer auch für Teerohstoff], bestehend aus einem festen, primären Lösungsmittel [*Trägerstoff*] und einer Übergangskomponente [*Tein und andere erwünschte und unerwünschte Begleitstoffe*], für eine vorbestimmte Verweilzeit [*Brühzeit*] miteinander in Kontakt gebracht. Dabei ist das primäre Gemisch in wenigstens einem flüssigkeitsdurchlässigen Behältnis innerhalb des Extraktionsbehälters eingeschlossen, wobei das Behältnis im allgemeinsten Falle einen beliebig geformten Raum ausbildet, vorzugsweise einen zylindrischen oder prismatischen, dessen Hauptachse vorzugsweise in Richtung der vertikalen Hauptachse des Extraktionsbehälters orientiert ist.

Das primäre Gemisch wird mit einer vorbestimmten zweiten Masse in das im Extraktionsbehälter befindliche Behältnis eingebracht, der Extraktionsbehälter wird mit einer vorbestimmten ersten Masse des sekundären Lösungsmittels befüllt, und zwar vorzugsweise mit der Brühtemperatur oder etwas darüber, und nach der Verweilzeit werden der gewonnene Extrakt und ein komplementärer Anteil Raffinat (= primäres Lösungsmittel nach der Extraktion) [*extrahierte Teeblätter*] voneinander getrennt. Ein von Raffinat mit Restfeuchte befreiter Extrakt wird aus dem Extraktionsbehälter abgeführt. Dem Raffinat mit Restfeuchte wird die aus Extrakt bestehende Restfeuchte durch Entfeuchten mittels in dem Behältnis durchgeführten mechanischen Verpressens wenigstens teilweise entzogen und dem Extrakt zugeführt.

Die der Erfindung zugrundeliegende Aufgabe wird verfahrenstechnisch gelöst, wenn bei dem Verfahren der gattungsgemäßen Art die nachstehenden Verfahrensschritte (i) bis (v) vorgesehen sind.

Dabei besteht bei dem Verfahren der erfinderische erste Grundgedanke einerseits im Wesentlichen darin, dass zur Lösung der gestellten Aufgabe mit Blick auf die Verbesserung des Stoffaustausches bei der Extraktion das im Behältnis eingeschlossene primäre Gemisch [*Teeblätter*] wenigsten an Teilbereichen des Behältnisses, die der Anströmung mit sekundärem Lösungsmittel [*Heißwasser*] und im Verlauf der Extraktion mit dem jeweils erzielten, vorliegenden Extrakt [*Teekonzentrat*] zugänglich sind, in Form wenigstens einer planmäßig ausgebrachten Strömung beschwallt wird. Der Stoffaustausch wird signifikant verbessert, wenn alternativ oder zusätzlich ein Aufwirbeln und Inschwebehalten des primären Gemischs innerhalb des Behältnisses durch Zufuhr des sekundären Lösungsmittels oder des jeweils erzielten Extrakts über einen Fußraum des Behältnisses durch eine aufwärts gerichtete vierte Strömung vorgesehen ist. Durch diese Maßnahme kann das primäre Gemisch unbehindert quellen und so seine den Stoffaustausch limitierende Oberfläche vergrößern.

Andererseits werden die vorstehenden Maßnahmen mit gleichem Ziel durch Bewegen des Behältnisses relativ zum Extraktionsbehälter innerhalb des sekundären Lösungsmittels und im Verlauf der Extraktion innerhalb des jeweils erzielten, vorliegenden Extrakts substituiert oder auch flankiert, d.h. Beschwallen, Aufwirbeln und Inschwebehalten sowie Bewegen werden alternativ oder sich überlagernd durchgeführt.

Zur weiteren Verbesserung des Stoffaustauschs besteht ein weiterer erfinderischer Grundgedanke darin, das sekundäre Lösungsmittel oder den Extrakt im Extraktionsbehälter über eine den Extraktionsbehälter einbindende Umlaufführung von oben nach unten, bezogen auf den Extraktionsbehälter, umzuwälzen. Das Umwälzen, das Beschwallen und das Aufwirbeln und Inschwebehalten kann beliebig miteinander kombiniert werden.

Ein an sich bekannter Lösungsgedanke besteht darin, dass zur Lösung der gestellten Aufgabe mit Blick auf eine weiter verbesserte Entfeuchtung eines Raffinats mit Restfeuchte [*extrahierte Teeblätter mit Restfeuchte*] zur Gewinnung weiteren besonders wertvollen Extrakts [*Teekonzentrat*] das Raffinat mit Restfeuchte durch mechanisches Verpressen in dem Behältnis behandelt wird. Dieses Verpressen erfolgt vorzugweise innerhalb des Extraktionsbehälters. Es kann aber auch außerhalb desselben durchgeführt werden, wobei der dabei gewonnene besonders wertvolle Extrakt gleichfalls dem bereits abgeschiedenen Extrakt zugeführt wird.

Verfahren

(i) Einbringen des primären Gemischs [*Teeblätter*] mit einer vorbestimmten zweiten Masse in das im Extraktionsbehälter befindliche Behältnis oder Verbringen des mit dem primären Gemisch mit einer vorbestimmten zweiten Masse befüllten Behältnisses in den Extraktionsbehälter.

Das wenigstens eine Behältnis wird vorzugsweise innerhalb oder auch außerhalb des Extraktionsbehälters mit der vorbestimmten zweiten Masse nach Maßgabe einer vorbestimmten ersten Konzentration befüllt. Das reibungslose und produktschonende Zuführen der zweiten Masse erfolgt zweckmäßig durch Zugabe einer geeigneten Menge Wasser zur zweiten Masse, wodurch quasi eine Schlämme zubereitet wird, die eine leichte und schonende Förderung, vorzugsweise mittels einer produktschonenden rotierenden Verdrängerpumpe, erlaubt.

(ii) Intensivieren der Fest-Flüssig-Extraktion während einer ersten Verweilzeit durch Bewegen des Behältnisses relativ zum Extraktionsbehälter innerhalb des jeweils erzielten Extrakts oder des sekundären Lösungsmittels. Weiterhin kann das Intensivieren der Fest-Flüssig-Extraktion während einer ersten Verweilzeit erfolgen durch

- wenigstens teilweises Beschwallen des Behältnisses in Form wenigstens einer mit dem sekundären Lösungsmittel [*Heißwasser*] oder dem jeweils erzielten Extrakt [*Teekonzentrat*] planmäßig und zielgerichtet ausgebrachten Strömung und/oder
- Aufwirbeln und Inschwebehalten des primären Gemischs innerhalb des Behältnisses durch Zufuhr des sekundären Lösungsmittels oder des jeweils erzielten Extrakts über einen Fußraum des Behältnisses durch eine aufwärts gerichtete vierte Strömung.

Das Beschwallen mit dem jeweils erzielten Extrakt oder mit dem anfänglich zur Verfügung stehenden sekundärem Lösungsmittel kann an allen aus dem Innenraum des Extraktionsbehälters zugänglichen Oberflächenbereichen des Behältnisses oder auch nur an Teilbereichen in Form wenigstens einer planmäßig und zielgerichtet ausgebrachten Strömung durchgeführt werden. Es kann eine erzwungene Strömung durch eine berandete Strömungsführung und es kann eine freie Strömung durch beispielsweise Umwälzbewegungen erzeugende Mittel erreicht werden. Die Zielrichtung kann durch beispielsweise Düsen in Verbindung mit der Berandung der Strömungsführung oder durch strömungslenkende Mittel in Verbindung mit den Umwälzbewegungen beeinflusst werden. Das Aufwirbeln und vorzugsweise gleichmäßige Inschwebehalten des primären Gemischs schafft stoffaustauschbegünstigende Quellmöglichkeiten für das primäre Gemisch [*Teeblätter*] und sorgt für die Aufrechterhaltung eines den Stoffaustausch treibenden hinreichenden Konzentrationsgefälles.

Das Bewegen kann in vorzugsweise ausgezeichneten Richtungen des Behältnisses erfolgen, insbesondere in Richtung der vertikalen Symmetrieachse des Behältnisses, wobei eine hin- und hergehende erste Translationsbewegung erfolgt. Weiterhin kann eine erste Rotationsbewegung, also eine Überlagerung beider Bewegungsfreiheitsgrade vorgesehen sein.

(iii) Umwälzen des sekundären Lösungsmittels oder des Extrakts im Extraktionsbehälter über eine den Extraktionsbehälter einbindende Umlaufführung von oben nach unten, bezogen auf den Extraktionsbehälter.

Eine weitere Intensivierung des Stoffaustausches ergibt sich, wenn das sekundäre Lösungsmittel oder der Extrakt im Extraktionsbehälter über eine den Extraktionsbehälter einbindende Umlaufführung, bezogen auf den Extraktionsbehälter, von oben nach unten umgewälzt wird. Diese Umlaufführung kann in jeder Phase der ersten und einer zweiten Verweilzeit vorteilhaft durchgeführt werden.

(iv) Zuführen des durch Entfeuchten gewonnenen und von Raffinat mit Restfeuchte befreiten Extrakts zu dem bereits abgeschiedenen oder abzuscheidenden von Raffinat mit Restfeuchte befreiten Extrakt.

Verbleibt das Behältnis nach der Extraktion im Extraktionsbehälter, dann kann der durch Verpressen des extrahierten Raffinats gewonnene Extrakt - zum Zwecke des Entfeuchtens des extrahierten Raffinats - dem bereits abgeschiedenen oder abzuscheidenden Extrakt zugeführt werden. In gleicher Weise kann verfahren werden, wenn das Behältnis zum Zwecke des Verpressens des extrahierten Raffinats aus dem Extraktionsbehälter verbracht wird.

(v) Auffüllen des Extraktionsbehälters mit einer vorbestimmten weiteren ersten Masse des sekundären Lösungsmittels nach der ersten Verweilzeit gemäß Schritt (ii), wobei die Fest-Flüssig-Extraktion um eine zweite Verweilzeit fortgesetzt wird.

Schritt (v) des Verfahrens verbessert die Intensität des Stoffaustauschs der Extraktion erfindungsgemäß dadurch weiter, dass nach der ersten Verweilzeit [*erste Brühzeit*] gemäß Schritt (ii) ein Auffüllen des Extraktionsbehälters mit einer vorbestimmten weiteren ersten Masse des sekundären Lösungsmittels vorgesehen ist. Durch diese Maßnahme "des Auffrischens mit sekundärem Lösungsmittel" wird das den Stoffaustausch maßgeblich bestimmende Konzentrationsgefälle zwischen den stoffaustauschenden Komponenten erhöht. Nach dieser Maßnahme ist weiterhin vorgesehen, dass die Fest-Flüssig-Extraktion um eine zweite Verweilzeit [*zweite Brühzeit*] fortgesetzt wird.

Ein Abführen des Extrakts aus dem Extraktionsbehälter durch Ablassen, ggf. unterstützt durch eine Fördereinrichtung und/oder ein gasförmiges Treibmittel, verwirklicht auf einfachste Weise eine Trennung des Extrakts von dem Raffinat mit Restfeuchte.

Das mechanische Verpressen des extrahierten Raffinats wird an einem flüssigkeitsdurchlässigen Behältnis durchgeführt, das beispielsweise entweder insgesamt elastisch verformbar ist oder bei dem eine Teiloberfläche beweglich, beispielsweise in Form eines Kolbens, ausgeführt ist.

Um eine effektive Entfeuchtung durch Verpressen des Raffinats mit Restfeuchte sicherzustellen, ist vorgesehen, dass das Entfeuchten frühestens mit Beginn des Trockenfallens eines ersten Teils des Raffinats mit Restfeuchte in dem im Extraktionsbehälter verbleibenden Behältnis beginnt. Falls das Entfeuchten in dem aus dem Extraktionsbehälter heraus verbrachten Behältnis durchgeführt wird, ist die vorstehend erwähnte effektive Entfeuchtung von vornherein sichergestellt.

Anschließend wird gemäß einem weiteren Vorschlag der insgesamt gewonnene und von Raffinat mit Restfeuchte befreite Extrakt [*Teekonzentrat*] einer Filterung zur Abscheidung unerwünschter Partikel, die durch die ersten Durchtrittsöffnungen des flüssigkeitsdurchlässigen Behältnisses hindurchgehen, unterzogen. Die ersten Durchtrittsöffnungen werden vorzugsweise durch eine Wandung des Behältnisses gebildet, die aus drei Schichten eines jeweiligen Siebes besteht. Die beiden äußeren Siebe haben vorzugsweise eine Porengröße von 1 mm und das mittlere Sieb weist vorzugsweise eine Porengröße von 0,25 mm auf. Die unerwünschten Partikel, die somit durch die ersten Durchtrittsöffnungen hindurchgehen und der besagten Filterung unterzogen werden, haben im Ausführungsbeispiel eine Partikelgröße von kleiner 0,25 mm. Sie werden im Rahmen der Endfiltration in Form einer Mikrofiltration unterzogen, die vorzugsweise einen Porendurchmesser von 200 nm bis 400 nm aufweist und damit größere Trubbildner weitgehend entfernt, wodurch wertgebende Inhaltsstoffe in annehmbarem Maß erhalten bleiben.

Es hat sich als zweckmäßig erwiesen, wenn der Filterung eine Vorklärung durch Separierung in einem Zentrifugalfeld vorgeschaltet wird, wodurch sich die Standzeit einer Filtereinrichtung zur Durchführung der Filterung signifikant erhöht.

Zur Beschleunigung des Entleerungsvorganges bei gleichzeitiger produktschonenden Behandlung des Extrakts ist weiterhin vorgesehen, dass ein Abführen des von Raffinat mit Restfeuchte befreiten Extrakts, das grundsätzlich selbsttätig oder auch zwangsweise erfolgt, zusätzlich durch einen Gasdruck eines gasförmigen Treibmittels unterstützt wird, das eine freie Oberfläche des Extrakts beaufschlagt. Bei dem gasförmigen Treibmittel kann es sich beispielsweise um sterile Luft oder Stickstoff handeln.

Das Verfahren sieht mit Blick auf die Betriebsweise des Extraktionsbehälters vor, dass das Verfahren in einem Extraktionsbehälter durchgeführt wird, der als diskontinuierlich arbeitender homogener Reaktionsbehälter ausgeführt ist.

Um die Produktionsleistung zu erhöhen, werden mehr als ein Extraktionsbehälter parallel und zeitgleich oder parallel und zeitversetzt betrieben. Die Weiterbehandlung des jeweils gewonnenen Extrakts bis zur Endfiltration erfolgt dann zeitgleich oder zeitversetzt in der vorstehend beschriebenen Prozesslinie.

Eine erfindungsgemäße Vorrichtung zur Herstellung eines Extraktes durch Fest-Flüssig-Extraktion, vorzugsweise durch Fest-Flüssig-Heißextraktion, mittels eines Extraktionsbehälters ist in bekannter Weise derart ausgestaltet, dass der Extraktionsbehälter wenigstens ein flüssigkeitsdurchlässiges Behältnis zur Aufnahme eines primären Gemischs [*Teeblätter*], bestehend aus einem festen, primären Lösungsmittel [*Trägerstoff*] und einer Übergangskomponente [*Tein und andere erwünschte und unerwünschte Begleitstoffe*], in sich aufnimmt. Weiterhin ist der Extraktionsbehälter dazu eingerichtet, ein sekundäres Lösungsmittel [*Heißwasser*] mit dem primären Gemisch in Kontakt zu bringen und das erzeugte Extraktionsergebnis in ein Raffinat mit Restfeuchte [*extrahierte Teeblätter mit Restfeuchte*] und in einen von Raffinat mit Restfeuchte befreiten Extrakt [*von extrahierten Teeblättern mit Restfeuchte befreites Teekonzentrat*] zu trennen. Das flüssigkeitsdurchlässige Behältnis ist hinsichtlich seiner ersten Durchtrittsöffnungen, beispielsweise Sieböffnungen, so bemessen, wie vorstehend beschrieben, dass das Raffinat mit Restfeuchte in hinreichendem Maße von dem von Raffinat mit Restfeuchte befreiten Extrakt getrennt wird.

Der Extraktionsbehälter besitzt wenigstens einen ersten Zulaufanschluss für die Zufuhr des sekundären Lösungsmittels, der vorzugsweise in den oberen Bereich des Extraktionsbehälters einmündet, erforderlichenfalls einen zweiten Zulaufanschluss für die Zufuhr des primären Gemischs und einen Anschluss für die Abfuhr des Extrakts.

Der erste Zulaufanschluss im oberen Bereich des Extraktionsbehälters erlaubt die Zufuhr des sekundären Lösungsmittels von oben, d.h. das primäre Gemisch *[Teeblätter]* im Behältnis wird bei der diesbezüglichen Befüllung des Extraktionsbehälters mit sekundärem Lösungsmittel von oben nach unten durchströmt bzw. durchdrungen.

Der Anschluss mündet in eine Ablaufleitung aus. Von der Ablaufleitung zweigt an einer ersten Abzweigungsstelle eine Umlaufleitung ab, die sich, in Strömungsrichtung gesehen, hinter einer Fördereinrichtung in wenigstens einen zu einem Innenraum des Extraktionsbehälters führenden weiteren Zulaufanschluss verzweigt.

Drei weitere Zulaufanschlüsse sind in einer zugeordneten Verrohrung fortgeführt, von denen eine untere Verrohrung unterhalb, eine obere Verrohrung oberhalb und eine mittlere Verrohrung im Bereich des Umfangs des Behältnisses ausmünden.

Dadurch wird bei Bedarf eine besonders wirksame allseitige Beschwallung des Behältnisses mit sekundärem Lösungsmittel oder Extrakt erreicht, die noch wirksamer ist, wenn das Behältnis gleichzeitig translatorisch und/oder rotativ bewegt wird.

Die obere Verrohrung ist alternativ oder zusätzlich fluidgängig an eine flexible Verrohrung angeschlossen, und die flexible Verrohrung führt fluidgängig zu einer im Fußraum des Behältnisses angeordneten zweiten Ringleitung, die sich im Fußraum radial innenseits und über dessen gesamten Umfang erstreckt und an ihrer Oberseite, dem Innenraum des Behältnisses zugewandt, mehrere über den Umfang der zweiten Ringleitung verteilt angeordnete Austrittsöffnungen aufweist,

Der Extraktionsbehälter weist eine Bewegungseinrichtung auf, die dazu eingerichtet ist, das Behältnis innerhalb des Extraktionsbehälters in eine hin- und hergehende erste Translationsbewegung und/oder wenigstens in eine erste Rotationsbewegung relativ zum Extraktionsbehälter zu versetzen. Die Vorrichtung besitzt eine Presseinrichtung, die dazu eingerichtet ist, einen Inhalt des Behältnisses zu verpressen. Weiterhin ist eine Steuereinrichtung vorgesehen, die signaltechnisch wenigstens mit der Bewegungseinrichtung und der Presseinrichtung verbunden ist.

Eine Ausführung sieht weiterhin vor, dass der Anschluss bedarfsweise für die Zufuhr des sekundären Lösungsmittels genutzt wird. Die alternative Zufuhr des sekundären Lösungsmittels über den vorzugsweise am unteren Ende des Extraktionsbehälters angeordneten Anschluss realisiert bzw. simuliert quasi ein Eintauchen des primären Gemischs [*Teeblätter*] im Sinne traditioneller häuslicher Zubereitung eines Teegetränks. Falls das flüssigkeitsdurchlässige Behältnis außerhalb des Extraktionsbehälters mit primärem Gemisch befüllt wird, kann der zweite Zulaufanschluss entfallen.

Da die vorstehend erwähnten ersten Durchtrittsöffnungen des flüssigkeitsdurchlässigen Behältnisses eine Trenngrenze hinsichtlich der abzuscheidenden Partikel besitzen, befrachten diese Partikel, die durch diese vorstehend beispielhaft quantifizierten ersten Durchtrittsöffnungen hindurchgehen und in der Regel unerwünscht sind, den Extrakt und müssen in einem weiteren Behandlungsschritt abgeschieden werden. Zu diesem Zweck ist vorgesehen, dass, in Strömungsrichtung gesehen, eine Filtereinrichtung hinter der ersten Abzweigungsstelle in der Ablaufleitung angeordnet ist, wobei diese Filtereinrichtung vorzugsweise als Mikrofiltration ausgebildet ist.

Da die Filtereinrichtung vorzugsweise eine Endklärung des Extraktes, das heißt eine Abscheidung von feinen und feinsten Partikel vornehmen soll, die vorstehend hinsichtlich ihrer Partikelgröße quantifiziert wurden, belasten gröbere Partikel, die durch die ersten Durchtrittsöffnungen des Behältnisses hindurchgehen, die Standzeit der Filtereinrichtung. Um dies zu vermeiden, sieht eine vorteilhafte Ausgestaltung der Vorrichtung vor, dass, in Strömungsrichtung gesehen, der Filtereinrichtung ein Zentrifugalseparator vorgeschaltet ist, der für eine Vorklärung des Extraktes sorgt.

Der Extraktionsbehälter ist in der Nomenklatur der Verfahrenstechnik oder chemischen Technologie vorzugsweise als diskontinuierlich arbeitender homogener Reaktionsbehälter ausgeführt.

Um das selbsttätige oder zwangsweise Abführen des von Raffinat mit Restfeuchte befreiten Extrakts [*von extrahierten Teeblättern mit Restfeuchte befreites Teekonzentrat*] produktschonend zu beschleunigen, ist vorgesehen, dass der Extraktionsbehälter im Bereich seines oberen Endes einen dritten Zufuhranschluss für die Zufuhr eines Druckgases aufweist.

Um die Produktionsleistung zu erhöhen ist weiterhin vorgesehen, dass der Extraktionsbehälter das mehr als ein Behältnis in sich aufnimmt, und zwar derart, dass die Behältnisse in einachsig oder mehrachsig reihenförmiger Anordnung dort gruppiert sind. Die Bewegungseinrichtung ist dazu eingerichtet, dem mehr als einen Behältnis eine erste oder eine zweite mechanische Energie zuzuführen. Weiterhin wird vorgeschlagen, die Behältnisse in einfach kreisförmiger oder konzentrisch mehrfach kreisförmiger Anordnung und jeweils mit oder ohne Belegung des Zentrums im Extraktionsbehälter zu gruppieren.

In der reihenförmigen Anordnung der Behältnisse ist vorgesehen, dass sich der ersten Translationsbewegung des einzelnen Behältnisses eine zweite hin- und hergehende Translationsbewegung überlagert, deren Richtung sich vorzugsweise durch die Richtung der jeweiligen Achse bestimmt, die durch die vorzugsweise vertikalen Symmetrieachsen der einachsig oder mehrachsig reihenförmigen Anordnung der Behältnisse gebildet ist.

Die Durchdringung des innerhalb des flüssigkeitsdurchlässigen Behältnisses befindlichen primären Gemischs mit sekundärem Lösungsmittel oder bereits erzeugtem Extrakt wird erleichtert und beschleunigt, wenn ein flüssigkeitsdurchlässiges modifiziertes Behältnis einen in sich geschlossenen Raum zur Bevorratung des primären Gemischs ausbildet, durch den ein Innendurchgang von der einen zur anderen Stirnseite des flüssigkeitsdurchlässigen modifiziertes Behältnis vollständig hindurchgreift. Vorzugsweis weist dieser Raum eine ringzylindrische Form auf, und sein Innendurchgang erstreckt sich von einer zur anderen Stirnseite des Raumes. Der Innendurchgang erlaubt einen verbesserten Abtransport des Extrakts aus dem jeweiligen Kernbereich der Schüttung des primären Gemischs innerhalb des modifizierten Behältnisses, weil sich die notwendige Eindringtiefe reduziert und bei der Beschwallung des modifizierten Behältnisses von außen ein Abtransport des Extrakts über den Innendurchgang gegeben ist.

Das vorgeschlagene erfindungsgemäße Verfahren, die erfindungsgemäß vorgeschlagene Vorrichtung und die Verwendung des Behältnisses sind in besonderer Weise geeignet, jeweils zur Herstellung eines Teekonzentrates verwendet zu werden.

## KURZBESCHREIBUNG DER ZEICHNUNGEN

Eine eingehendere Darstellung der Erfindung ergibt sich aus der folgenden Beschreibung und den beigefügten Figuren der Zeichnung sowie aus den Ansprüchen. Die Erfindung ist in den verschiedensten Ausgestaltungen eines Verfahrens zur Herstellung eines Extraktes durch Fest-Flüssig-Extraktion der gattungsgemäßen Art realisierbar. Weiterhin ist die Erfindung in den verschiedensten Ausführungsformen einer Vorrichtung zur Herstellung eines Extraktes durch Fest-Flüssig-Extraktion und eines Behältnisses für diese Vorrichtung verwirklicht. Nachfolgend werden anhand der Zeichnung das Verfahrens, die Vorrichtung und das Behältnis an einem bevorzugten Anwendungsbeispiel zur Herstellung eines Teeextraktes beschrieben. Es zeigen

**Figur 1** in schematischer Darstellung eine erfindungsgemäße Vorrichtung mit einem erfindungsgemäßen Extraktionsbehälter und einem erfindungsgemäßen flüssigkeitsdurchlässigen Behältnis;

**Figur 2** in schematischer Darstellung einen Querschnitt durch den Extraktionsbehälter entsprechend einem in **Figur 1** mit **"E-F"** gekennzeichneten Schnittverlauf, wobei nur der geschnittene Innenbereich des Extraktionsbehälters dargestellt ist;

**Figur 3a** in einer Prinzipskizze einen Querschnitt durch einen im Wesentlichen zylinderförmigen Extraktionsbehälter innerhalb einer Vorrichtung gemäß **Figur 1** mit vier flüssigkeitsdurchlässigen Behältnissen in einfach kreisförmiger Anordnung;

**Figur 3b** in einer Prinzipskizze einen Querschnitt durch einen im Wesentlichen quaderförmigen Extraktionsbehälter innerhalb einer Vorrichtung gemäß **Figur 1** mit vier flüssigkeitsdurchlässigen Behältnissen in einachsig reihenförmiger Anordnung;

**Figur 4** in schematischer Darstellung eine Perspektive eines flüssigkeitsdurchlässigen modifizierten Behältnisses

| | in ringzylindrischer Form mit einem Innendurchgang und |
| **Figur 5** | ein Flussdiagramm des erfindungsgemäßen Verfahrens. |

Allgemeines

Zum Verständnis der nachfolgenden Symbolik zur Darstellung einer Fest-Flüssig-Extraktion bzw. Fest-Flüssig-Heißextraktion werden vorab einige grundsätzliche Hinweise gegeben (zur nachfolgenden und auch vorhergehenden Schreibweise: 1. Begrifflichkeiten für den allgemeinen Fall an erster Stelle; 2. [*Herstellung von Teekonzentrat*] an zweiter Stelle). Eine Fest-Flüssig-Extraktion liegt beispielsweise vor, wenn Teekonzentrat mit Hilfe von Wasser aus Teeblättern extrahiert wird. Die Extraktion ist also keine vollwertige Zerlegung, denn nur die eine der zu trennenden Komponenten fällt in annähernd reinem Zustand an; die andere wird nur umgelagert und liegt nach der Extraktion wieder in einem Gemisch vor.

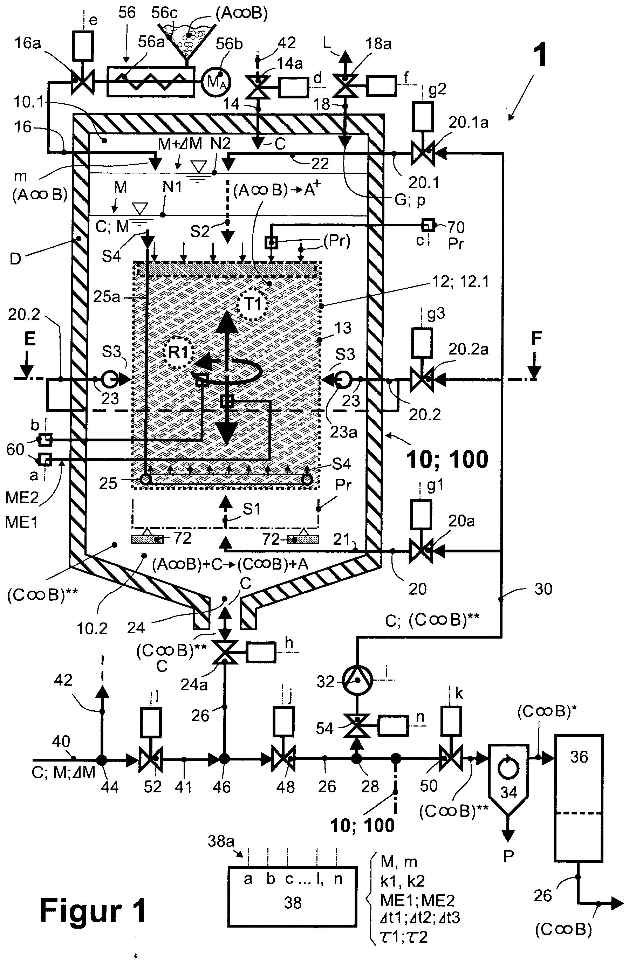

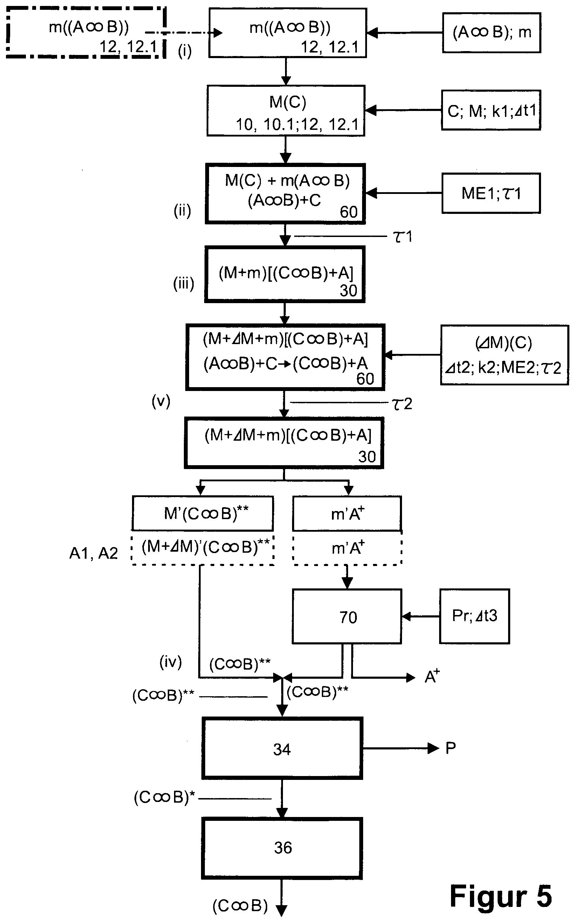

Ein Einsatzgemisch (A∞B) wird "primäres Gemisch" [*Teeblätter*] und eine durch die Extraktion erzeugte Lösung "sekundäres Gemisch" oder Extrakt (C∞B) [*Teekonzentrat*] genannt, wobei die Schreibweise (A∞B) bzw. (C∞B) die Phase "Gemisch" bzw. "Lösung" kennzeichnen soll. Ein von einer Phase in die andere übergehender Stoff ist eine "Übergangskomponente" [*Tein und andere erwünschte oder unerwünschte Begleitstoffe*], die nachfolgend mit B gekennzeichnet wird. Eine nicht übergehende Komponente des primären Gemischs ist ein "primäres Lösungsmittel" oder ein Trägerstoff A [*Trägerstoff vor der Extraktion*]. Er fällt nach der Extraktion in annähernd reinem Zustand als "Raffinat" A (primäres Lösungsmittel nach Extraktion) [*extrahierte Teeblätter*] an, während der Extrakt (C∞B) [*Teekonzentrat*] sich aus einem sekundären Lösungsmittel C [*Wasser; Heißextraktion: Heißwasser oder kochendes Wasser → nachfolgend auf Heißwasser reduziert*] und der Übergangskomponente B [*Tein und andere erwünschte oder unerwünschte Begleitstoffe*] zusammensetzt. Die vorstehende Fest-Flüssig-Extraktion oder die Fest-Flüssig-Heißextraktion kann bei Verwendung der obigen Symbole durch das folgende Schema (1), siehe auch **Figuren 1** und **5** dargestellt werden:

$$(A∞B)+C \rightarrow (C∞B)+A \, , \qquad\qquad (1)$$

wobei der Term (A∞B)+C nachfolgend als Mischung (aus primärem Gemisch und sekundärem Lösungsmittel) [*Mischung (aus Teeblättern und Heißwasser)*] und der Term (C∞B)+A nachfolgend als Gemisch (aus Extrakt + Raffinat nach der Extraktion) [*Teekonzentrat + extrahierte Teeblätter*] bezeichnet werden.

Vorrichtung **(Figuren 1** bis **4)**

Eine erfindungsgemäße Vorrichtung 1 zur industriellen Herstellung des Extraktes (C∞B) durch Fest-Flüssig-Extraktion, insbesondere einer Fest-Flüssig-Heißextraktion, mittels eines erfindungsgemäßen Extraktionsbehälters 10, 100 zeigt **Figur 1.**

Der Extraktionsbehälter 10, 100 nimmt wenigstens ein mit ersten Durchtrittsöffnungen 13 versehenes flüssigkeitsdurchlässiges Behältnis 12, 12.1 zur Aufnahme des primären Gemischs (A∞B), bestehend aus dem festen, primären Lösungsmittel A und der Übergangskomponente B, in sich auf. Das Behältnis 12, 12.1 kann einen beliebigen Rauminhalt ausbilden; bevorzugt wird eine zylindrische oder prismatische Form, deren Längsachse vorzugsweise in Richtung der Längsachse des Extraktionsbehälters 10, 100 orientiert ist. Der Extraktionsbehälter 10, 100 ist dazu eingerichtet, das sekundäre Lösungsmittel C mit dem primären Gemisch (A∞B) in Kontakt zu bringen und das erzeugte Extraktionsergebnis, den Extrakt (C∞B), in ein Raffinat mit Restfeuchte $A^+$ und in einen von Raffinat mit Restfeuchte $A^+$ befreiten Extrakt (C∞B)** zu trennen.

Der Extraktionsbehälter 10, 100 besitzt in einem oberen Bereich, einem Kopfraum 10.1, einen ersten Zulaufanschluss 14 mit einem ersten Zulaufventil 14a für die Zufuhr des sekundären Lösungsmittels C, das mit einer vorbestimmten ersten Masse M vorgelegt wird und dort eine erste freie Oberfläche N1, einen ersten Flüssigkeitsspiegel, ausbildet. Erforderlichenfalls ist im ersten Kopfraum 10.1 ein zweiter Zulaufanschluss 16 mit einem zweiten Zulaufventil 16a vorgesehen, über den das im Extraktionsbehälter 10, 100 befindliche Behältnis 12, 12.1 mit primärem Gemischs (A∞B) [*Teeblätter*] mit einer vorbestimmten zweiten Masse m befüllt wird. Die erste Masse M und die zweite Masse m ergeben zusammen eine entsprechende Mischung (A∞B)+C [*Mischung aus Teeblättern und Heißwasser*]. Ein Fußraum 10.2 des Extraktionsbehälters 10, 100 weist einen Anschluss 24 mit einem Anschlussventil 24a für die Abfuhr des von Raffinat mit Restfeuchte $A^+$ befreiten Extrakts (C∞B)** und bedarfsweise für die Zufuhr des sekundären Lösungsmittels C auf. Weiterhin ist am oberen Ende des Kopfraumes 10.1 ein dritter Zulaufanschluss 18 mit einem dritten Zulaufventil 18a für die Zufuhr eines gasförmigen Treibmittels, eines Druckgases G, mit einem Gasdruck p vorgesehen. Über den dritten Zulaufanschluss 18 und das zugeordnete dritte Zulaufventil 18a wird im Zuge des Befüllens des Extraktionsbehälters 10, 100 zweckmäßig ein Druckausgleich durch Abfuhr von verdrängter Luft L hergestellt. Der Extraktionsbehälter 10, 100 besitzt zur thermischen Isolierung gegenüber seiner Umgebung eine Dämmung D.

Der Anschluss 24 mündet in eine Ablaufleitung 26 aus, die, in Strömungsrichtung gesehen und vorzugsweise um eine hinreichende Zulaufhöhe in Schwerkraftrichtung vom Anschluss 24 vertikal beabstandet, hinter einer Vereinigungsstelle 46, an der ein erster Zulaufleitungsabschnitt 41 einmündet, ein erstes Absperrventil 48 aufweist. Die Ablaufleitung 26 nimmt weiterhin, wiederum in Strömungsrichtung gesehen, hinter einer ersten Abzweigungsstelle 28 ein zweites Absperrventil 50 auf. Im Anschluss an das zweite Absperrventil 50 ist, in Strömungsrichtung gesehen, in der Ablaufleitung 26 eine Filtereinrichtung 36 zur Abscheidung feiner und feinster Partikel aus dem Extrakt angeordnet, wobei der Extrakt durch die Filtereinrichtung 36 vom von Raffinat mit Restfeuchte $A^+$ befreiten Extrakt (C∞B)** zum filtrierten Extrakt (C∞B) wird. Der erste Zulaufleitungsabschnitt 41 ist über ein drittes Absperrventil 52 absperrbar. Eine Zulaufleitung 40, über das sekundäre Lösungsmittel C mit der ersten Masse M und einer weiteren ersten Masse ΔM bereitgestellt wird, verzweigt sich an einer zweiten Abzweigungsstelle 44 in den ersten Zulaufleitungsabschnitt 41 und in einen zweiten Zulaufleitungsabschnitt 42, wobei letzterer über das erste Zulaufventil 14a mit dem ersten Zulaufanschluss 14 verbunden ist.

Zur Vorklärung des von Raffinat mit Restfeuchte befreiten Extraktes (C∞B)** ist, ebenfalls in Strömungsrichtung gesehen, der Filtereinrichtung 36 optional ein Zentrifugalseparator 34 zur Abscheidung von gröberen Partikeln P, die die ersten Durchtrittsöffnungen 13 des Behältnisses 12, 12.1 beim Abführen des von Raffinat mit Restfeuchte befreiten Extraktes (C∞B)** aus dem Extraktionsbehälter 10, 100 passiert haben, vorgeschaltet. Dadurch wird aus dem an dieser Stelle abgeführten von Raffinat mit Restfeuchte befreiten Extrakt (C∞B)** ein vorgeklärter Extrakt (C∞B)*, der sich standzeitverlängernd für die Filtereinrichtung 36 auswirkt.

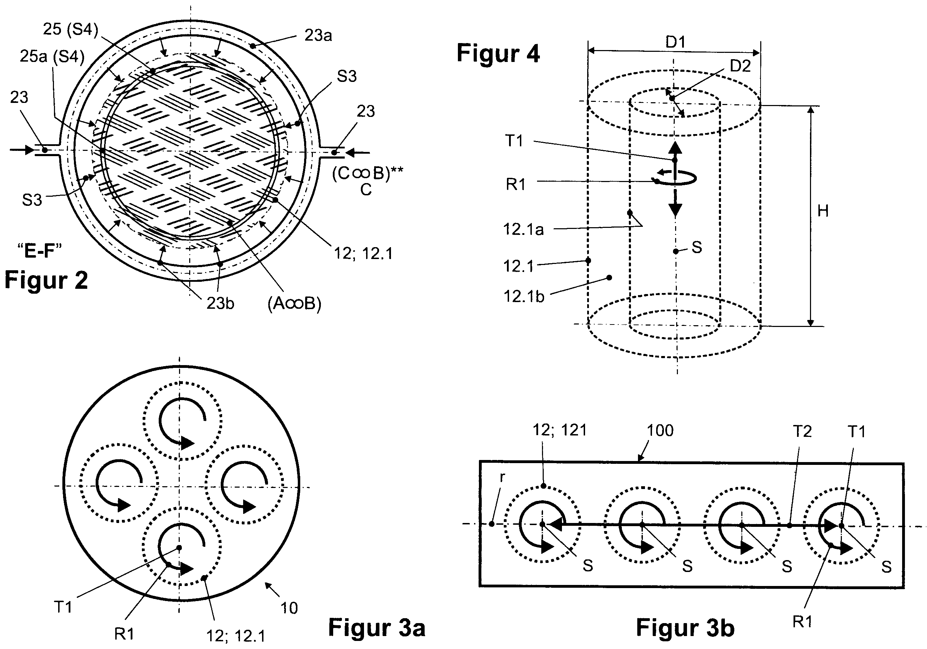

Von der Ablaufleitung 26 zweigt an der ersten Abzweigungsstelle 28 eine Umlaufleitung 30 ab, die sich, in Strömungsrichtung gesehen, auf dem Weg über ein viertes Absperrventil 54 und eine nachgeordnete Fördereinrichtung 32 in wenigstens einen weiteren Zulaufanschluss 20 verzweigt, wobei im Ausführungsbeispiel drei weitere Zulaufanschlüsse 20, 20.1, 20.2, die jeweils in den Innenraum des Extraktionsbehälters 10, 100 führen, vorgesehen sind. Die weiteren Zulaufanschlüsse 20, 20.1, 20.2 sind jeweils mittels eines zugeordneten weiteren Absperrventils 20a, 20.1a, 20.2a absperrbar. In einer vorgeschlagenen Ausführungsform sind die drei weiteren Zulaufanschlüsse 20, 20.1, 20.2 in einer zugeordneten Verrohrung 21, 22, 23 fortgeführt, von denen eine untere Verrohrung 21 unterhalb, eine obere Verrohrung 22 oberhalb und eine mittlere Verrohrung 23 im Bereich des Umfangs des Behältnisses 12, 12.1 ausmünden. Die mittlere Verrohrung 23 führt in eine das Behältnis 12, 12.1 umschließende erste Ringleitung 23a **(Figuren 2, 1),** wobei vorzugsweise mindestens zwei Anschlüsse vorgesehen sind, die diametral zueinander bzw. vorzugsweise gleichmäßig über den Umfang der ersten Ringleitung 23a verteilt angeordnet sind. Die erste Ringleitung 23a ist im Bereich ihres dem Behältnis 12, 12.1 zugewandten Umfangsbereichs vorzugsweise mit mehreren über den Umfang vorzugsweise gleichmäßig verteilten zweiten Durchtrittsöffnungen 23b versehen, die eine Beschwallung des mit primärem Gemisch (A∞B) befüllten Behältnisses 12, 12.1 mit sekundärem Lösungsmittel C oder mit dem jeweils erzeugten von Raffinat mit Restfeuchte befreiten Extrakt (C∞B)** in Form einer dritten Strömung S3 ermöglichen. Über die untere Verrohrung 21 wird eine planmäßige und zielgerichtete erste Strömung S1 und über die obere Verrohrung 22 wird eine ebensolche zweite Strömung S2 in Form einer vorstehend beschriebenen Beschwallung auf die jeweilige Stirnseite des Behältnisses 12, 12.1 ausgebracht.

Die obere Verrohrung 22 ist optional oder zusätzlich fluidgängig an eine zumindest in ihrem Anschlussbereich flexible Verrohrung 25a angeschlossen. Sie führt entweder außer- oder innerhalb des Behältnisses 12, 12.1 fluidgängig zu einer im Fußraum des Behältnisses 12; 12.1 angeordneten zweiten Ringleitung 25, die sich dort radial innenseits und über dessen gesamten Umfang erstreckt. Die zweite Ringleitung 25 weist an ihrer Oberseite, dem Innenraum des Behältnisses 12; 12.1 zugewandt, mehrere über ihren Umfang verteilt angeordnete Austrittsöffnungen auf, über die eine vierte Strömung S4, die der zweiten Strömung S2 oder einem Teil derselben entsprechen kann, in den Innenraum des Behältnisses 12, 12.1 ausgebracht wird.

Der Extraktionsbehälter 10, 100 weist eine Bewegungseinrichtung 60 auf, die dazu eingerichtet ist, das Behältnis 12 12.1 innerhalb des Extraktionsbehälters 10, 100 durch Zufuhr einer ersten und einer zweiten mechanischen Energie ME1, ME2 in eine hin- und hergehende erste Translationsbewegung T1 und/oder wenigstens in eine erste Rotationsbewegung R1 zu versetzen. Die erste mechanische Energie ME1 ist dem Befüllungsgrad des Extraktionsbehälters 12, 12.1 mit der ersten Masse M (erste freie Oberfläche N1) und die zweite mechanische Energie ME2 ist jenem mit der ersten Masse M und der weiteren ersten Masse ΔM (eine zweite freie Oberfläche N2) zugeordnet.

Die Vorrichtung 1 besitzt eine Presseinrichtung 70, die im Ausführungsbeispiel im Extraktionsbehälter 10, 100 angeordnet und dazu eingerichtet ist, einen Inhalt des Behältnisses 12, 12.1 dort zu verpressen. Eine Presskraft Pr wirkt dabei beispielsweise auf eine beweglich ausgebildete Teilfläche des Behältnisses 12, 12.1, beispielweise in Form eines flüssigkeitsdurchlässigen Kolbens, wobei eine Reaktionskraft zur Presskraft Pr über Auflager 72 für die Presseinrichtung, wie in **Figur 1** gezeigt, generiert wird.

Falls die Vorrichtung 1 dazu eingerichtet ist, das Behältnis 12, 12.1 außerhalb des Extraktionsbehälters 10, 100 mit primärem Gemisch (A∞B) zu befüllen (eine zweite Betriebsweise), können die Presseinrichtung 70 und die zugeordneten Auflager 72 zweckmäßig auch außerhalb des Extraktionsbehälters 10, 100 angeordnet sein. In diesem Falle kann das erfindungsgemäße Entfeuchten des Raffinats mit Restfeuchte $A^+$ durch mechanisches Verpressen desselben zweckmäßig auch außerhalb des Extraktionsbehälters 10, 100 durchgeführt werden. Weiterhin wird bei der letztgenannten zweiten Betriebsweise nach dem Verbringen des mit primärem Gemisch (A∞B) befüllten Behältnisses 12, 12.1 der Extraktionsbehälter 10, 100 entweder, wie vorstehend beschrieben, mit sekundärem Lösungsmittel C befüllt oder das diesbezügliche Behältnis 12, 12.1 wird in das im Extraktionsbehälter 10, 100 mit der ersten Masse M vorgelegte sekundäre Lösungsmittel C abgesenkt.

Falls das Behältnis 12, 12.1 im Rahmen einer ersten Betriebsweise innerhalb des Extraktionsbehälters 10, 100 mit dem primären Gemisch (A∞B) *[Teeblätter]* befüllt wird, ist der zweite Zulaufanschluss 16 zweckmäßig mit einer produktschonenden, vorzugsweise rotierenden Fördereinrichtung 56 verbunden, die vorzugsweise eine Förderschnecke 56a aufweist, die von einem Antrieb 56b, vorzugsweise einem regelbaren Antriebsmotor $M_A$, angetrieben ist. Das primäre Gemisch (A∞B) ist in einem Vorratsbehälter 56c bevorratet, aus dem es der Förderschnecke 56a, vorzugsweise mit Wasser zu einer Schlämme aufbereitet, zuläuft. Bei beiden Betriebsweisen kann der durch Entfeuchten mittels Verpressen gewonnen von Raffinat mit Restfeuchte befreite Extrakt (C∞B)** dem bereits abgeschiedenen oder abzuscheidenden von Raffinat mit Restfeuchte befreiten Extrakt (C∞B)** zugeführt werden.

Es ist eine Steuereinrichtung 38 vorgesehen, die signaltechnisch über Signalübertragungsleitungen 38a wenigstens mit der Bewegungseinrichtung 60 und der Presseinrichtung 70 verbunden ist (Signalanschlüsse a, b, c). Die Zulaufventile 14a, 16a, 18a und 20a bis 20.2a, das Anschlussventil 24a, die Fördereinrichtung 32 und die Absperrventile 48, 50, 52 und 54 werden im Automatikbetrieb von der Steuereinrichtung 38 über die Signalanschlüsse d, e, f und g1 bis g3, h, i und j, k, l und n angesteuert.

An die Ablaufleitung 26, zwischen der ersten Abzweigungsstelle 28 und dem zweiten Absperrventil 50, können weitere Extraktionsbehälter 10, 100 der vorbeschriebenen Art angeschlossen werden, um die Produktionsleistung der Vorrichtung 1 zu erhöhen.

Der Extraktionsbehälter 10 in einer im Wesentlichen zylindrischen Form ist dazu eingerichtet, das mehr als eine Behältnis 12, 12.1 in einfach kreisförmiger **(Figur 3a)** oder konzentrisch mehrfach kreisförmiger Anordnung (nicht dargestellt) und jeweils mit oder ohne Belegung des Zentrums in sich aufzunehmen. Der Rotationsbewegung R1 kann sich jeweils die erste Translationsbewegung T1 überlagern.

Ein modifizierter Extraktionsbehälter 100 in einer im Wesentlichen quaderförmigen Ausgestaltung **(Figur 3b)** ist dazu eingerichtet, das mehr als eine Behältnis 12, 12.1 in einachsig oder mehrachsig reihenförmiger Anordnung in sich aufzunehmen. Bei dieser Anordnung der Behältnisse 12, 12.1 überlagert sich der ersten Translationsbewegung T1 des einzelnen Behältnisses 12, 12.1 eine zweite hin- und hergehende Translationsbewegung T2, deren Richtung r sich durch die Richtung der jeweiligen Achse bestimmt, die durch die Symmetrieachsen S der einachsig oder mehrachsig reihenförmigen Anordnung gebildet ist. Den Translationsbewegungen T1, T2 kann sich jeweils die erste Rotationsbewegung R1 überlagern.

**Figur 4** zeigt ein flüssigkeitsdurchlässiges modifiziertes Behältnis 12.1 das einen in sich geschlossenen Raum 12.1b zur Bevorratung des primären Gemischs (A∞B) ausbildet, durch den ein Innendurchgang 12.1a von der einen zur anderen Stirnseite des modifizierten Behältnisses 12.1 vollständig hindurchgreift. Der Raum 12.1b weist vorzugsweise eine ringzylindrische Form auf mit dem von einer zur anderen Stirnseite des Raumes 12.1a vollständig durchgreifenden und vorzugsweise zylindrisch ausgeführten Innendurchgang 12.1a. Ein Außendurchmesser des modifizierten Behältnisses 12.1 ist mit D1, sein Innendurchmesser (Innendurchgang 12.1a) ist mit Innendurchmesser D2 und seine Höhe ist mit H bezeichnet. Für die vorbestimmte zweite Masse m primären Gemischs (A∞B) im modifizierten Behältnis 12.1 wird die vom sekundären Lösungsmittel C oder dem vorliegenden Extrakt bis zum Kern der jeweiligen Schüttung zu überwindende notwendige Eindringtiefe umso kleiner, je kleiner die Durchmesserdifferenz D1-D2 und damit je größer die Höhe H ist (schlanker Ringzylinder). Die erste Translationsbewegung T1 und die erste Rotationsbewegung R1 orientieren sich zweckmäßig an der vorzugsweise vertikal ausgerichteten Symmetrieachse S des ringzylindrischen modifizierten Behältnisses 12.1.

Verfahren **(Figuren 1, 5)**

Das erfindungsgemäße Verfahren ist durch die Verfahrensschritte (i) bis (v) des Anspruchs 1 gekennzeichnet, die in ihrem Bedingungszusammenhang und ihrer Bedeutung in einem Flussdiagramm der **Figur 5** grafisch veranschaulicht sind. Die nachfolgende Verfahrensbeschreibung stellt wiederum die Begrifflichkeiten zur Herstellung von Teekonzentrat, wie diese in der Bezugszeichenliste der verwendeten Abkürzungen in Konkordanz zu den übergeordneten Begriffen angegeben sind, neben die übergeordneten Begriffe. Die gegenüber dem Stand der Technik neuen Verfahrensschritte bzw. Behandlungsmerkmale sind in **Figur 5** durch eine breitere Linienführung hervorgehoben.

- Gemäß Schritt (i) wird primäres Gemisch (A∞B) *[Teeblätter]* mit der vorbestimmten zweiten Masse m in das im Extraktionsbehälter 10, 100 befindliche Behältnis 12, 12.1 über den zweiten Zulaufanschluss 16 eingebracht oder es wird das mit dem primären Gemisch (A∞B) mit einer vorbestimmten zweiten Masse m befüllte Behältnis 12, 12.1 in den Extraktionsbehälter 10, 100 verbracht (Pfeil bei (i)) - **(Figur 5:** Vorgabe (A∞B) und m, → m((A∞B)); **Figur 1).**

- In an sich bekannter Weise wird der Extraktionsbehälter 10, 100 mit einer vorbestimmten ersten Masse M des sekundären Lösungsmittels C [*Heißwasser*] entsprechend einer vorgegebenen ersten Konzentration k1 = m/M über den ersten Zulaufanschluss 14 oder alternativ über den Anschluss 24 bis zur ersten freien Oberfläche N1 (erster Flüssigkeitsspiegel) in einer ersten Befüllzeit Δt1 befüllt **(Figur 5: Vorgabe C, M, k1 und Δt1 → M(C); Figur 1).**

Die erste Konzentration k1 ist nach Gleichung (1) definiert:

$$k1 = \frac{m}{M} = \frac{m(A\infty B)}{M(C)} \qquad\qquad (1)$$

- Die sich anschließende Extraktion in der ersten Verweilzeit τ1 [*Brühzeit*] kann durch folgendes Schema (2) dargestellt werden:

$$\textbf{(A∞B)+C → (C∞B)+A} \qquad\qquad (2)$$

Die erste Masse M sekundäres Lösungsmittel C [*Heißwasser*] und die zweite Masse m primäres Gemisch (A∞B) [*Teeblätter*] bilden zu Beginn der ersten Verweilzeit τ1 die Mischung (A∞B)+C.

- Gemäß Schritt (ii) wird während der ersten Verweilzeit τ1 die Fest-Flüssig-Extraktion intensiviert, und zwar durch Bewegen des Behältnisses 12, 12.1 relativ zum Extraktionsbehälter 10, 100 innerhalb des jeweils erzielten Extrakts (C∞B) durch Zufuhr einer ersten mechanischen Energie ME1 über die Bewegungseinrichtung 60. Weiterhin kann dies erfolgen

    - durch wenigstens teilweises Beschwallen des Behältnisses 12, 12.1 in Form wenigstens einer mit dem sekundären Lösungsmittel C oder dem jeweils erzielten Extrakt (C∞B) planmäßig und zielgerichtet ausgebrachten Strömung und/oder
    - Aufwirbeln und Inschwebehalten des primären Gemischs (A∞B) innerhalb des Behältnisses 12; 12.1 durch Zufuhr des sekundären Lösungsmittels C oder des jeweils erzielten Extrakts (C∞B) über einen Fußraum des Behältnisses 12; 12.1 durch eine aufwärts gerichtete vierte Strömung S4.

- Nach Schritt (iii) ergibt sich eine weitere Intensivierung des Stoffaustauschs durch Umwälzen des sekundären Lösungsmittels C [*Heißwasser*] oder des Extrakts (C∞B) im Extraktionsbehälter 10; 100 über eine den Extraktionsbehälter 10; 100 einbindende Umlaufführung 30 von oben nach unten, bezogen auf den Extraktionsbehälter 10; 100.

- Nach der ersten Verweilzeit τ1 liegt das Gemisch (C∞B)+A [*Teekonzentrat + extrahierte Teeblätter*] mit der Gesamtmasse M+m vor, bestehend aus dem Extrakt (C∞B) [*Teekonzentrat*] und dem Raffinat A [*Teeblätter*] **(Figur 5: Vorgabe ME1 und τ1 → (M+m)[(C∞B)+A]; Figur 1).**

- Gemäß Schritt (iv) wird der durch Entfeuchten gewonnene von Raffinat mit Restfeuchte befreite Extrakt (C∞B)** dem bereits abgeschiedenen oder abzuscheidenden von Raffinat mit Restfeuchte befreiten Extrakt (C∞B) zugeführt.

- <u>Gemäß Schritt (v) des Verfahrens wirddie Intensität des Stoffaustauschs der Extraktion erfindungsgemäß dadurch weiter verbessert, dass nach der ersten Verweilzeit τ1 [*erste Brühzeit*] gemäß den Schritten (ii, iii) ein Auffüllen des Extraktionsbehälters 10, 100 mit einer vorbestimmten weiteren ersten Masse ΔM des sekundären Lösungsmittels C [*Heiß wasser*]</u> vorgesehen ist. Die weitere erste Masse ΔM wird entsprechend einer vorgegebenen zweiten Konzentration k2 = m/(M+ΔM) über den ersten Zulaufanschluss 14 oder alternativ über den Anschluss 24 bis zur zweiten freien Oberfläche N2 (zweiter Flüssigkeitsspiegel) in einer zweiten Befüllzeit Δt2 zugeführt.

Die zweite Konzentration k2 ist nach Gleichung (3) definiert:

$$k2 = \frac{m}{M+\Delta M} = \frac{m(A\infty B)}{M(C)+\Delta M(C)} = \frac{m(A\infty B)}{(M+\Delta M)(C)} \qquad\qquad (3)$$

Durch diese Maßnahme "des Auffrischens mit sekundärem Lösungsmittel" C [*Heißwasser*] wird das den Stoffaustausch maßgeblich bestimmende Konzentrationsgefälle zwischen den stoffaustauschenden Komponenten erhöht. Nach dieser Maßnahme ist weiterhin vorgesehen, dass die Fest-Flüssig-Extraktion um eine zweite Verweilzeit

$\tau 2$ [*zweite Brühzeit*] fortgesetzt wird. Während der zweiten Verweilzeit $\tau 2$ wird die Fest-Flüssig-Extraktion durch wenigstens teilweises Beschwallen des Behältnisses 12, 12.1 und/oder Aufwirbeln und Inschwebehalten des primären Gemischs (A∞B) innerhalb des Behältnisses 12; 12.1 gemäß Schritt (ii) mit dem jeweils erzielten Extrakt (C∞B) und/oder durch Bewegen des Behältnisses 12, 12.1 relativ zum Extraktionsbehälter 10, 100 innerhalb des jeweils erzielten Extrakts (C∞B) gemäß Schritt (ii) durch Zufuhr einer zweiten mechanischen Energie ME2 über die Bewegungseinrichtung 60 intensiviert **(Figur 5:** Vorgabe $\Delta t$, k2, ME2 und $\tau 2 \rightarrow$ (M+$\Delta$M+m)[(C∞B)+A]; **Figur 1).**

Die vorstehend angegebene Umlaufführung gemäß Schritt (iii) kann in jeder Phase der ersten und der zweiten Verweilzeit $\tau 1$, $\tau 2$ vorteilhaft durchgeführt.

• In an sich bekannter Weise wird ein von Raffinat mit Restfeuchte befreiter Extrakt (C∞B)** [*von extrahierten Teeblättern mit Restfeuchte befreites Teekonzentrat]* aus dem Extraktionsbehälter 10, 100 über den Anschluss 24 in die Ablaufleitung 26 abgeführt.
Es liegen eine erste Masse M' von Raffinat mit Restfeuchte befreiter Extrakt (C∞B)** [*von extrahierten Teeblättern mit Restfeuchte befreites Teekonzentrat]* und eine zweite Masse m' Raffinat mit Restfeuchte A+ [*extrahierte Teeblätter mit Restfeuchte*] vor **(Figur 5; Figur 1).**

• In an sich bekannter Weise wird das Raffinat mit Restfeuchte A+ [*extrahierte Teeblätter mit Restfeuchte*] durch mechanisches Verpressen des Raffinats mit Restfeuchte A+ in dem Behältnis 12, 12.1 mittels der Presseinrichtung 70 durch Aufbringung einer Presskraft Pr über eine Presszeit $\Delta t3$ entfeuchtet. Der dadurch zusätzlich gewonnene von Raffinat mit Restfeuchte befreite Extrakt (C∞B)** wird dem bereits gewonnenen von Raffinat mit Restfeuchte befreiten Extrakt (C∞B)** zugeführt **(Figur 5:** Vorgabe Pr und $\Delta t3$; **Figur 1).**
Das Entfeuchten beginnt vorzugsweise, wie dies vorgeschlagen wird, frühestens mit Beginn des Trockenfallens eines ersten Teils des Raffinats mit Restfeuchte A+ in dem im Extraktionsbehälter 10, 100 verbleibenden Behältnis 12, 12.1.

• Das von extrahierten Teeblättern mit Restfeuchte A+ befreite Teekonzentrat (C∞B)** wird zweckmäßig in dem Zentrifugalseparator 34 durch die Abscheidung von Partikeln P unterhalb der Trenngrenze der ersten Durchtrittsöffnungen 13 im Behältnis 12, 12.1 vorgeklärt und anschließend als vorgeklärtes Teekonzentrat (C∞B)* der Filtereinrichtung 36 zugeführt, die es dann als filtriertes Teekonzentrat (C∞B) verlässt, um beispielsweise zu einem Teegetränk weiterbehandelt zu werden.

<u>BEZUGSZEICHENLISTE DER VERWENDETEN ABKÜRZUNGEN</u>

**Figuren 1 bis 4**

1   Vorrichtung

10   Extraktionsbehälter
100   modifizierter Extraktionsbehälter
10.1   Kopfraum
10.2   Fußraum

12   Behältnis (flüssigkeitsdurchlässig)
12.1   modifiziertes Behältnis
12.1a   Innendurchgang
12.1b   Raum

13   erste Durchtrittsöffnungen

14   erster Zulaufanschluss
14a   erstes Zulaufventil

16   zweiter Zulaufanschluss
16a   zweites Zulaufventil

18   dritter Zulaufanschluss

18a     drittes Zulaufventil

20, 20.1, 20.2     weitere Zulaufanschlüsse
20a, 20.1a, 20.2a     weitere Zulaufventile

21     untere Verrohrung
22     obere Verrohrung

23     mittlere Verrohrung (erste Ringleitung)
23a     erste Ringleitung
23b     zweite Durchtrittsöffnung

24     Anschluss
24a     Anschlussventil

25     zweite Ringleitung
25a     flexible Verrohrung

26     Ablaufleitung
28     erste Abzweigungsstelle
30     Umlaufleitung
32     Fördereinrichtung
34     Zentrifugalseparator
36     Filtereinrichtung

38     Steuereinrichtung
38a     Signalübertragungsleitung
40     Zulaufleitung
41     erster Zulaufleitungsabschnitt
42     zweiter Zulaufleitungsabschnitt
44     zweite Abzweigungsstelle
46     Vereinigungsstelle
48     erstes Absperrventil
50     zweites Absperrventil
52     drittes Absperrventil
54     viertes Absperrventil

56     Fördereinrichtung
56a     Förderschnecke
56b     Antriebsmotor
56c     Vorratsbehälter

60     Bewegungseinrichtung
70     Presseinrichtung
72     Auflager (für die Presseinrichtung)

D     Dämmung

D1     Außendurchmesser
D2     Innendurchmesser

G     gasförmiges Treibmittel/Druckgas - (Luft; Stickstoff, inertes Gas)
H     Höhe
L     Luft

$M_A$     Antriebsmotor (allgemein)

ME1     erste mechanische Energie

ME2    zweite mechanische Energie

N1    erste freie Oberfläche (erster Flüssigkeitsspiegel)
N2    zweite freie Oberfläche (zweiter Flüssigkeitsspiegel)

P    Partikel
Pr    Presskraft

R1    erste Rotationsbewegung
S    Symmetrieachse

S1    erste Strömung
S2    zweite Strömung
S3    dritte Strömung
S4    vierte Strömung

T1    erste Translationsbewegung
T2    zweite Translationsbewegung
a bis I, n    Signalanschluss

p    Gasdruck
r    Richtung

**Figur 5**

| | Übergeordnete Begriffe | Spezielle Anwendung: Herstellung von Teekonzentrat |
|---|---|---|
| A | primäres Lösungsmittel (vor Extraktion) | Trägerstoff (vor Extraktion) |
| A | Raffinat (= primäres Lösungsmittel nach Extraktion) | extrahierte Teeblätter |
| $A^+$ | Raffinat mit Restfeuchte | extrahierte Teeblätter mit Restfeuchte |
| B | Übergangskomponente | Tein und andere erwünschte und unerwünschte Begleitstoffe |
| C | sekundäres Lösungsmittel | Heißwasser oder kochendes Wasser |
| $(A \infty B)$ | primäres Gemisch | Teeblätter (Teerohstoff) |
| $(A \infty B)+C$ | Mischung aus primärem Gemisch und sekundärem Lösungsmittel | Mischung aus Teeblättern und Heißwasser |
| $(C \infty B)$ | Extrakt | Teekonzentrat (in der Endstufe filtriert) |
| $(C \infty B)^{**}$ | von Raffinat mit Restfeuchte befreiter Extrakt | von extrahierten Teeblättern mit Restfeuchte befreites Teekonzentrat |
| $(C \infty B)^*$ | vorgeklärter Extrakt | vorgeklärtes Teekonzentrat |
| $(C \infty B)+A$ | Gemisch (Extrakt + Raffinat nach Extraktion) | Teekonzentrat + extrahierte Teeblätter |
| M | erste Masse (C) | erste Masse (Heißwasser) |
| M' | erste Masse von Raffinat mit Restfeuchte befreiter Extrakt | erste Masse von extrahierten Teeblättern mit Restfeuchte befreites Teekonzentrat |
| $\Delta M$ | weitere erste Masse (C) | weitere erste Masse (Heißwasser) |
| k1 | erste Konzentration (zweite Masse m des primären Gemischs bezogen auf das sekundäre Lösungsmittel mit der ersten Masse M) $\rightarrow k1 = m/M$ | erste Konzentration (zweite Masse m der Teeblätter bezogen auf das Heißwasser mit der ersten Masse M) |
| k2 | zweite Konzentration (zweite Masse m des primären Gemischs bezogen auf das sekundäre Lösungsmittel mit der ersten Masse M und der weiteren ersten Masse $\Delta M$) | zweite Konzentration (zweite Masse m der Teeblätter bezogen auf das Heißwasser mit der ersten Masse M und der weiteren ersten Masse $\Delta M$) |

(fortgesetzt)

| | Übergeordnete Begriffe | Spezielle Anwendung: Herstellung von Teekonzentrat |
|---|---|---|
| | → k2 = m/(M+ΔM) | |
| m | zweite Masse ((A∞B)) | zweite Masse (Teeblätter) |
| m' | zweite Masse Raffinat mit Restfeuchte | zweite Masse extrahierte Teeblätter mit Restfeuchte |
| Δt1 | erste Befüllzeit (sekundäres Lösungsmittel mit der ersten Masse M) | erste Befüllzeit (Heißwasser mit der ersten Masse M) |
| Δt2 | zweite Befüllzeit (sekundäres Lösungsmittel mit der weiteren ersten Masse ΔM) | zweite Befüllzeit (Heißwasser mit der weiteren ersten Masse ΔM) |
| Δt3 | Presszeit (Raffinat mit Restfeuchte) | Presszeit (extrahierte Teeblätter mit Restfeuchte) |
| $\tau$1 | erste Verweilzeit | erste Brühzeit |
| $\tau$2 | zweite Verweilzeit | zweite Brühzeit |

## Patentansprüche

1.  Verfahren zur industriellen Herstellung eines Extraktes durch Fest-Flüssig-Extraktion mittels eines Extraktionsbehälters (10; 100), bei dem ein im Extraktionsbehälter (10; 100) befindliches sekundäres Lösungsmittel (C) und ein primäres Gemisch ((A∞B)), bestehend aus einem festen, primären Lösungsmittel (A) und einer Übergangskomponente (B), zur Gewinnung des Extraktes ((C∞B)) für eine vorbestimmte Verweilzeit miteinander in Kontakt gebracht werden, wobei das primäre Gemisch ((A∞B)) in wenigstens einem flüssigkeitsdurchlässigen Behältnis (12; 12.1) innerhalb des Extraktionsbehälters (10; 100) eingeschlossen ist, bei dem das primäre Gemischs ((A∞B)) mit einer vorbestimmten zweiten Masse (m) in das im Extraktionsbehälter (10; 100) befindliche Behältnis (12; 12.1) eingebracht wird, bei dem der Extraktionsbehälter (10; 100) mit einer vorbestimmten ersten Masse (M) des sekundären Lösungsmittels (C) befüllt wird, bei dem nach der Verweilzeit der gewonnene Extrakt ((C∞B)) und ein komplementärer Anteil Raffinat (A) voneinander getrennt werden, bei dem ein von Raffinat mit Restfeuchte (A$^+$) befreiter Extrakt ((C∞B)\*\*) aus dem Extraktionsbehälter (10; 100) abgeführt wird, und bei dem dem Raffinat mit Restfeuchte (A$^+$) die aus Extrakt bestehende Restfeuchte durch Entfeuchten mittels mechanischen Verpressens in dem Behältnis (12; 12.1) wenigstens teilweise entzogen und dem Extrakt ((C∞B)) zugeführt wird, **gekennzeichnet durch** folgende Verfahrensschritte:

    (i) Einbringen des primären Gemischs ((A∞B)) mit der vorbestimmten zweiten Masse (m) in das im Extraktionsbehälter (10; 100) befindliche Behältnis (12; 12.1) oder
    Verbringen des mit dem primären Gemisch ((A∞B)) mit einer vorbestimmten zweiten Masse (m) befüllten Behältnisses (12; 12.1) in den Extraktionsbehälter (10; 100);
    (ii) Intensivieren der Fest-Flüssig-Extraktion während einer ersten Verweilzeit ($\tau$1) durch Bewegen des Behältnisses (12; 12.1) relativ zum Extraktionsbehälter (10; 100) innerhalb des jeweils erzielten Extrakts ((C∞B)) in einer hin- und hergehenden ersten Translationsbewegung; •
    (iii) Umwälzen des sekundären Lösungsmittels (C) oder des Extrakts ((C∞B)) im Extraktionsbehälter (10; 100) über eine den Extraktionsbehälter (10; 100) einbindende Umlaufführung von oben nach unten, bezogen auf den Extraktionsbehälter (10; 100), und
    (iv) Zuführen des durch Entfeuchten gewonnenen und von Raffinat mit Restfeuchte befreiten Extrakts ((C∞B)\*\*) zu dem bereits abgeschiedenen oder abzuscheidenden von Raffinat mit Restfeuchte befreiten Extrakt ((C∞B)\*\*)
    (v) Auffüllen des Extraktionsbehälters (10; 100) mit einer vorbestimmten weiteren ersten Masse (ΔM) des sekundären Lösungsmittels (C) nach der ersten Verweilzeit ($\tau$1) gemäß Schritt (ii), wobei die Fest-Flüssig-Extraktion um eine zweite Verweilzeit ($\tau$2) fortgesetzt wird.

2.  Verfahren nach Anspruch 1, **dadurch gekennzeichnet, dass** das Intensivieren der Fest-Flüssig-Extraktion während einer ersten Verweilzeit ($\tau$1) weiterhin durch wenigstens teilweises Beschwallen des Behältnisses (12; 12.1) in Form wenigstens einer mit dem sekundären Lösungsmittel (C) oder dem jeweils erzielten Extrakt ((C∞B)) planmäßig und zielgerichtet ausgebrachten Strömung (S1, S2, S3) und/oder durch Aufwirbeln und Inschwebehalten des primären Gemischs ((A∞B)) innerhalb des Behältnisses (12; 12.1) durch Zufuhr des sekundären Lösungsmittels (C) oder des jeweils erzielten Extrakts ((C∞B)) über einen Fußraum des Behältnisses (12; 12.1) durch eine aufwärts gerichtete vierte Strömung (S4) erfolgt.

3. Verfahren nach einem der Ansprüche 1 oder 2, **dadurch gekennzeichnet, dass** das Bewegen des Behältnisses (12; 12.1) relativ zum Extraktionsbehälter (10; 100) innerhalb des jeweils erzielten Extrakts ((C∞B)) weiterhin in einer ersten Rotationsbewegung erfolgt.

4. Verfahren nach einem der Ansprüche 1 bis 3
**dadurch gekennzeichnet,**
**dass** das Entfeuchten frühestens mit Beginn des Trockenfallens eines ersten Teils des Raffinats mit Restfeuchte (A⁺) in dem im Extraktionsbehälter (10; 100) verbleibenden Behältnis (12; 12.1) beginnt.

5. Verfahren nach einem der Ansprüche 1 bis 4,
**dadurch gekennzeichnet,**
**dass** der insgesamt gewonnene und vom Raffinat mit Restfeuchte (A⁺) befreite Extrakt ((C∞B)\*\*) einer Filterung zur Abscheidung unerwünschter Partikel, die durch die ersten Durchtrittsöffnungen (13) des flüssigkeitsdurchlässigen Behältnisses (12; 12.1) hindurchgehen, unterzogen wird.

6. Verfahren nach Anspruch 5,
**dadurch gekennzeichnet,**
**dass** der insgesamt gewonnene und vom Raffinat mit Restfeuchte (A⁺) befreite Extrakt ((C∞B)\*\*) zur Vorklärung einer Separierung in einem Zentrifugalfeld unterzogen und damit zu einem vorgeklärten Extrakt ((C∞B)\*) wird.

7. Verfahren nach einem der Ansprüche 1 bis 6,
**dadurch gekennzeichnet,**
**dass** ein selbsttätiges oder zwangsweises Abführen des von Raffinat mit Restfeuchte (A⁺) befreiten Extrakts ((C∞B)\*\*) zusätzlich durch einen Gasdruck (p) eines gasförmigen Treibmittels (G) unterstützt wird, das eine freie Oberfläche (N1; N2) des von Raffinat mit Restfeuchte befreiten Extrakts ((C∞B)\*\*) beaufschlagt.

8. Verfahren nach einem der Ansprüche 1 bis 7,
**dadurch gekennzeichnet,**
**dass** das Verfahren mittels des Extraktionsbehälters (10; 100) durchgeführt wird, der als diskontinuierlich arbeitender homogener Reaktionsbehälter ausgeführt ist.

9. Vorrichtung (1) zur industriellen Herstellung eines Extraktes durch Fest-Flüssig-Extraktion mittels eines Extraktionsbehälters (10; 100) der Vorrichtung (1), der wenigstens ein flüssigkeitsdurchlässiges Behältnis (12; 12.1) zur Aufnahme eines primären Gemischs ((A∞B)), bestehend aus einem festen, primären Lösungsmittel (A) und einer Übergangskomponente (B), in sich aufnimmt, der dazu eingerichtet ist, ein sekundäres Lösungsmittel (C) mit dem primären Gemisch ((A∞B)) in Kontakt zu bringen und das erzeugte Extraktionsergebnis in ein Raffinat mit Restfeuchte (A⁺) und in einen von Raffinat mit Restfeuchte (A⁺) befreiten Extrakt ((C∞B)\*\*) zu trennen,

    • wobei der Extraktionsbehälter (10; 100) wenigstens einen ersten Zulaufanschluss (14) für die Zufuhr des sekundären Lösungsmittels (C), erforderlichenfalls einen zweiten Zulaufanschluss (16) für die Zufuhr des primären Gemischs ((A∞B)) und einen Anschluss (24) für die Abfuhr eines von Raffinat mit Restfeuchte (A⁺) befreiten Extrakts ((C∞B)\*\*) besitzt,
    • wobei der Anschluss (24) in eine Ablaufleitung (26) ausmündet,
    • wobei von der Ablaufleitung (26) an einer ersten Abzweigungsstelle (28) eine Umlaufleitung (30) abzweigt, die sich, in Strömungsrichtung gesehen, hinter einer Fördereinrichtung (32) in wenigstens einen zu einem Innenraum des Extraktionsbehälters (10; 100) führenden weiteren Zulaufanschluss (20, 20.1, 20.2) verzweigt,
    • wobei drei weitere Zulaufanschlüsse (20, 20.1, 20.2) in einer zugeordneten Verrohrung (21, 22, 23) fortgeführt sind, von denen eine untere Verrohrung (21) unterhalb, eine obere Verrohrung (22) oberhalb und eine mittlere Verrohrung (23) im Bereich des Umfangs des Behältnisses (12; 12.1) ausmünden,
    • wobei die obere Verrohrung (22) alternativ oder zusätzlich fluidgängig an eine flexible Verrohrung (25a) angeschlossen ist und die flexible Verrohrung (25a) fluidgängig zu einer im Fußraum des Behältnisses (12; 12.1) angeordneten zweiten Ringleitung (25) führt, die sich im Fußraum radial innenseits und über dessen gesamten Umfang erstreckt und an ihrer Oberseite, dem Innenraum des Behältnisses (12; 12.1) zugewandt, mehrere über den Umfang der zweiten Ringleitung (25) verteilt angeordnete Austrittsöffnungen aufweist,
    • wobei der Extraktionsbehälter (10; 100) eine Bewegungseinrichtung (60) aufweist, die dazu eingerichtet ist, das Behältnis (12; 12.1) innerhalb des Extraktionsbehälters (10; 100) in eine hin- und hergehende erste Translationsbewegung (T1) und/oder wenigstens in eine erste Rotationsbewegung (R1) zu versetzen,
- wobei die Vorrichtung (1) eine Presseinrichtung (70) besitzt, die dazu eingerichtet ist, einen Inhalt des Behältnisses (12; 12.1) zu verpressen und
- wobei eine Steuereinrichtung (38) vorgesehen ist, die signaltechnisch wenigstens mit der Bewegungseinrichtung (60) und der Presseinrichtung (70) verbunden ist.

10. Vorrichtung nach Anspruch 9, **dadurch gekennzeichnet, dass** der Anschluss (24) bedarfsweise für die Zufuhr des sekundären Lösungsmittels (C) genutzt wird.

11. Vorrichtung nach einem der Ansprüche 9 oder 10,
**dadurch gekennzeichnet,**
**dass** die mittlere Verrohrung (23) in eine das Behältnis (12; 12.1) umschließende erste Ringleitung (23a) mit zweiten Durchtrittsöffnungen (23b) ausmündet, wobei die zweiten Durchtrittsöffnungen (23b) dem Behältnis (12; 12.1) zugewandt sind.

12. Vorrichtung nach einem der Ansprüche 9 bis 11,
**dadurch gekennzeichnet,**
**dass**, in Strömungsrichtung gesehen, eine Filtereinrichtung (36) hinter der ersten Abzweigungsstelle (28) in der Ablaufleitung (26) angeordnet ist.

13. Vorrichtung nach Anspruch 12,
**dadurch gekennzeichnet,**
**dass**, in Strömungsrichtung gesehen, der Filtereinrichtung (36) ein Zentrifugalseparator (34) vorgeschaltet ist.

14. Vorrichtung nach einem der Ansprüche 9 bis 13,
**dadurch gekennzeichnet,**
**dass** der Extraktionsbehälter (10; 100) als diskontinuierlich arbeitender homogener Reaktionsbehälter ausgeführt ist.

15. Vorrichtung (1) nach einem der Ansprüche 9 bis 14,
**dadurch gekennzeichnet,**
**dass** der Extraktionsbehälter (10; 100) im Bereich seines oberen Endes einen dritten Zufuhranschluss (18) für die Zufuhr eines Druckgases (G) aufweist.

16. Vorrichtung (1) nach einem der Ansprüche 9 bis 15,
**dadurch gekennzeichnet,**

**dass** der Extraktionsbehälter (10; 100) das mehr als eine Behältnis (12; 12.1)

- in einachsig oder mehrachsig reihenförmiger Anordnung oder
- in einfach kreisförmiger oder konzentrisch mehrfach kreisförmiger Anordnung und jeweils mit oder ohne Belegung des Zentrums

in sich aufnimmt und die Bewegungseinrichtung (60) dazu eingerichtet ist, dem mehr als einen Behältnis (12; 12.1) eine erste oder eine zweite mechanische Energie (ME1, ME2) zuzuführen.

17. Vorrichtung (1) nach Anspruch 16,
**dadurch gekennzeichnet,**
**dass** sich in der reihenförmigen Anordnung der Behältnisse (12; 12.1) der ersten Translationsbewegung (T1) des einzelnen Behältnisses (12; 12.1) eine zweite hin- und hergehende Translationsbewegung (T2) überlagert, deren Richtung (r) sich durch die Richtung der jeweiligen Achse bestimmt, die durch die Symmetrieachsen (S) der einachsig oder mehrachsig reihenförmigen Anordnung der Behältnisse (12; 12.1) gebildet ist

18. Verwendung eines Behältnisses in einer Vorrichtung (1) nach einem der Ansprüche 9 bis 17,
**dadurch gekennzeichnet,**
**dass** das flüssigkeitsdurchlässige Behältnis (12; 12.1) in Form eines flüssigkeitsdurchlässigen modifizierten Behältnisses (12.1) derart ausgeführt ist, dass es einen in sich geschlossenen Raum (12.1b) zur Bevorratung des primären Gemischs (A∞B) ausbildet, durch den ein Innendurchgang (12.1a) von der einen zur anderen Stirnseite des flüssigkeitsdurchlässigen modifizierten Behältnisses (12.1) vollständig hindurchgreift.

19. Verwendung nach Anspruch 18,
**dadurch gekennzeichnet,**
**dass** der Raum (12.1b) eine ringzylindrische Form aufweist und sich der Innendurchgang (12.1a) von einer zur anderen Stirnseite des Raumes (12.1b) erstreckt.

20. Verwendung nach einem der Ansprüche 18 oder 19 zur Herstellung eines Teekonzentrats ((C∞B)).

21. Verwendung des Verfahrens nach einem der Ansprüche 1 bis 8 oder der Vorrichtung (1) nach einem der Ansprüche 9 bis 17 jeweils zur Herstellung eines Teekonzentrats ((C∞B)).

## Claims

1. A method for the industrial production of an extract by solid-liquid extraction by means of an extraction container (10; 100), in which a secondary solvent (C) located in the extraction container (10; 100) and a primary mixture ((A∞B)) consisting of a solid primary solvent (A) and a transition component (B) are brought into contact with one another for a predetermined dwell time to obtain the extract ((C∞B)), wherein the primary mixture ((A∞B)) is enclosed in at least one liquid-permeable vessel (12; 12.1) within the extraction container (10; 100), in which the primary mixture ((A∞B)) with a predetermined second mass (m) is introduced into the vessel (12; 12.1) located in the extraction container (10; 100) in which the extraction container (10; 100) is filled with a predetermined first mass (M) of the secondary solvent (C), in which the obtained extract ((C∞B)) and a complementary portion of raffinate (A) are separated from one another after the dwell time, in which an extract ((C∞B)**) freed from raffinate with residual moisture ($A^+$) is discharged from the extraction container (10; 100), and in which the residual moisture consisting of extract is at least partially removed from the raffinate with residual moisture ($A^+$) through dehumidification by means of mechanical pressing in the vessel (12; 12.1) and supplied to the extract ((C∞B)), **characterized by** the following method steps:

   (i) introducing the primary mixture ((A∞B)) with the predetermined second mass (m) into the vessel (12; 12.1) located in the extraction container (10; 100), or
   placing the vessel (12; 12.1) filled with the primary mixture ((A∞B)) with a predetermined second mass (m) into the extraction container (10; 100);
   (ii) enhancing the solid-liquid extraction during a first dwell time ($\tau$1) by moving the vessel (12; 12.1) relative to the extraction container (10; 100) within the extract ((C∞B)) attained in each case in a back-and-forth first translatory movement;
   (iii) circulating the secondary solvent (C) or the extract ((C∞B)) in the extraction container (10; 100) via a circulation guide integrating the extraction container (10; 100) from top to bottom, based on the extraction container (10; 100), and
   (iv) supplying the extract ((C∞B)**) obtained by dehumidification and freed from raffinate with residual moisture to the extract ((C∞B)**) freed from raffinate with residual moisture, which is already separated or to be separated,
   (v) filling the extraction container (10; 100) with a predetermined further first mass ($\Delta M$) of the secondary solvent (C) after the first dwell time ($\tau$1) according to step (ii), wherein the solid-liquid extraction is continued by a second dwell time ($\tau$2).

2. The method according to Claim 1, **characterized in that** the solid-liquid extraction is furthermore enhanced during a first dwell time ($\tau$1) by at least partially flooding the vessel (12; 12.1) in the form of at least one flow (S1, S2, S3) yielded in a planned and targeted manner with the secondary solvent (C) or the extract ((C∞B)) attained in each case, and/or by swirling and keeping in suspension the primary mixture ((A∞B)) within the vessel (12; 12.1) by supplying the secondary solvent (C) or the extract ((C∞B)) attained in each case via a foot region of the vessel (12; 12.1) through an upwardly directed fourth flow (S4).

3. The method according to any one of Claims 1 or 2, **characterized in that** the vessel (12; 12.1) is furthermore moved relative to the extraction container (10; 100) within the extract ((C∞B)) attained in each case in a first rotary movement.

4. The method according to any one of Claims 1 to 3 **characterized in that** the dehumidification starts at the earliest upon the commencement of drying out a first part of the raffinate with residual moisture ($A^+$) in the vessel (12; 12.1) remaining in the extraction container (10; 100).

5. The method according to any one of Claims 1 to 4, **characterized in that** all the extract ((CooB)**) which is obtained and freed from the raffinate with residual moisture (A⁺) is subjected to filtering to separate undesirable particles which pass through the first through-openings (13) of the liquid-permeable vessel (12; 12.1).

6. The method according to Claim 5, **characterized in that** all the extract ((CooB)**) which is obtained and freed from the raffinate with residual moisture (A⁺) is subject to separation in a centrifugal field for pre-clarification and therefore becomes a pre-clarified extract ((C∞B)*).

7. The method according to any one of Claims 1 to 6, **characterized in that** an automatic or forced discharging of the extract ((C∞B)**) freed from raffinate with residual moisture (A⁺) is additionally supported by a gas pressure (p) from a gaseous propellant (G) which is applied to a free surface (N1; N2) of the extract ((CooB)**) freed from raffinate with residual moisture.

8. The method according to any one of Claims 1 to 7, **characterized in that** the method is performed by means of the extraction container (10; 100) which is embodied as a discontinuously working homogeneous reaction container.

9. A device (1) for the industrial production of an extract by solid-liquid extraction by means of an extraction container (10; 100) of the device (1), which incorporates at least one liquid-permeable vessel (12; 12.1) for receiving a primary mixture ((A∞B)) consisting of a solid primary solvent (A) and a transition component (B), which is designed to bring a secondary solvent (C) into contact with the primary mixture ((A∞B)), and to separate the generated extraction result into a raffinate with residual moisture (A⁺) and into an extract ((CooB)**) freed from raffinate with residual moisture (A⁺),

   • wherein the extraction container (10; 100) possesses at least one first supply connection (14) for supplying the secondary solvent (C), if required, a second supply connection (16) for supplying the primary mixture ((A∞B)), and a connection (24) for discharging an extract ((CooB)**) freed from raffinate with residual moisture (A⁺),
   • wherein the connection (24) opens out into a drain line (26),
   • wherein from the drain line (26), a circulating line (30) branches off at a first branching point (28) which, viewed in the direction of flow, branches after a conveying apparatus (32) into at least one further supply connection (20, 20.1, 20.2) leading to an inner chamber of the extraction container (10; 100),
   • wherein three further supply connections (20, 20.1, 20.2) are continued in associated piping (21, 22, 23), of which one bottom pipe (21) opens out below, a top pipe (22) opens out above, and a middle pipe (23) opens out in the region of the circumference of the vessel (12; 12.1),
   • wherein the top pipe (22) is alternatively or additionally fluidically connected to a flexible pipe (25a), and the flexible pipe (25a) leads fluidically to a second ring line (25) arranged in the foot region of the vessel (12; 12.1), which extends radially on the inside of the foot region and over its entire circumference and, at its top side facing the inner chamber of the vessel (12; 12.1), has multiple exit openings arranged distributed over the circumference of the second ring line (25),
   • wherein the extraction container (10; 100) has a moving apparatus (60) which is designed to set the vessel (12; 12.1) within the extraction container (10; 100) into a back-and-forth first translatory movement (T1) and/or at least into a first rotary movement (R1),
   • wherein the device (1) possesses a pressing apparatus (70) which is designed to press the content of the vessel (12; 12.1), and
   • wherein a control apparatus (38) is provided, which is connected in terms of signaling to at least the moving apparatus (60) and the pressing apparatus (70).

10. The device according to Claim 9, **characterized in that** the connection (24) is utilized, if necessary, for supplying the secondary solvent (C).

11. The device according to any one of Claims 9 or 10, **characterized in that** the middle pipe (23) opens out into a first ring line (23a) which encloses the vessel (12; 12.1) and has second through-openings (23b), wherein the second through-openings (23b) face the vessel (12; 12.1).

12. The device according to any one of Claims 9 to 11, **characterized in that**, viewed in the direction of flow, a filter apparatus (36) is arranged after the first branching point (28) in the drain line (26).

13. The device according to Claim 12, **characterized in that**, viewed in the direction of flow, a centrifugal separator (34) is upstream of the filter apparatus (36).

14. The device according to any one of Claims 9 to 13, **characterized in that** the extraction container (10; 100) is embodied as a discontinuously working homogeneous reaction container.

15. The device (1) according to any one of Claims 9 to 14, **characterized in that** the extraction container (10; 100) has a third supply connection (18) for supplying a compressed gas (G) in the region of its top end.

16. The device (1) according to any one of Claims 9 to 15, **characterized in that** the extraction container (10; 100) incorporates the more than one vessel (12; 12.1)

  • in a single-axis or multi-axis rowed arrangement, or
  • in a single circular, or concentric multi-circular arrangement in each case with or without occupying the center,

and the moving apparatus (60) is designed to supply the more than one vessel (12; 12.1) with first or secondary mechanical energy (ME1, ME2).

17. The device (1) according to Claim 16, **characterized in that** in the rowed arrangement of the vessels (12; 12.1), the first translatory movement (T1) of the individual vessel (12; 12.1) is overlapped by a second back-and-forth translatory movement (T2), the direction (r) of which is determined by the direction of the respective axis which is formed by the axes of symmetry (S) of the single-axis or multi-axis rowed arrangement of the vessels (12; 12.1)

18. Use of a vessel in a device (1) according to any one of Claims 9 to 17, **characterized in that** the liquid-permeable vessel (12; 12.1) in the form of a liquid-permeable, modified vessel (12.1) is embodied such that it configures an enclosed chamber (12. 1b) for storing the primary mixture ((A∞B)), through which an inner passage (12.1a) engages completely from the one to the other face of the liquid-permeable, modified vessel (12.1).

19. Use according to Claim 18, **characterized in that** the chamber (12.1b) has a ring-cylindrical shape, and the inner passage (12.1a) extends from one to the other face of the chamber (12.1b).

20. Use according to any one of Claims 18 or 19 for the production of a tea concentrate ((C∞B)).

21. Use of the method according to any one of Claims 1 to 8 or of the device (1) according to any one of Claims 9 to 17 in each case for the production of a tea concentrate ((C∞B)).

**Revendications**

1. Procédé de fabrication industrielle d'un extrait par extraction solide-liquide au moyen d'un récipient d'extraction (10 ; 100), dans lequel un solvant secondaire (C) situé dans le récipient d'extraction (10 ; 100) et un mélange primaire ((AooB)) constitué d'un solvant primaire solide (A) et d'un composant de transition (B) sont mis en contact l'un avec l'autre pendant un temps de séjour prédéfini pour l'obtention de l'extrait ((C∞B)), dans lequel le mélange primaire ((A∞B)) est confiné dans au moins un réservoir perméable au liquide (12 ; 12.1) à l'intérieur du récipient d'extraction (10 ; 100), dans lequel le mélange primaire ((AooB)) est introduit avec une deuxième masse prédéfinie (m) dans le réservoir (12 ; 12.1) situé dans le récipient d'extraction (10 ; 100), dans lequel le récipient d'extraction (10 ; 100) est rempli avec une première masse prédéfinie (M) du solvant secondaire (C), dans lequel l'extrait ((C∞B)) obtenu et une part complémentaire de raffinat (A) sont séparés l'un de l'autre après le temps de séjour, dans lequel un extrait ((C∞B)**) débarrassé de raffinat présentant une humidité résiduelle (A$^+$) est évacué du récipient d'extraction (10 ; 100), et dans lequel l'humidité résiduelle constituée d'extrait est au moins partiellement retirée du raffinat présentant une humidité résiduelle (A$^+$) par déshumidification au moyen d'une compression mécanique dans le réservoir (12 ; 12.1) et transmise à l'extrait ((C∞B)),
   **caractérisé par** les étapes de procédé suivantes :

   (i) introduction du mélange primaire ((A∞B)) avec la deuxième masse prédéfinie (m) dans le réservoir (12 ; 12.1) situé dans le récipient d'extraction (10 ; 100) ou
   transfert du réservoir (12 ; 12.1) rempli avec le mélange primaire ((A∞B)) avec une deuxième masse prédéfinie (m) dans le récipient d'extraction (10 ; 100) ;
   (ii) intensification de l'extraction solide-liquide pendant un premier temps de séjour ($\tau$1) par déplacement du réservoir (12 ; 12.1) par rapport au récipient d'extraction (10 ; 100) dans l'extrait ((C∞B)) respectivement obtenu, selon un premier mouvement de translation alternatif ;

(iii) agitation du solvant secondaire (C) ou de l'extrait ((CooB)) dans le récipient d'extraction (10 ; 100) par le biais d'un tuyau de circulation intégrant le récipient d'extraction (10 ; 100), de haut en bas par rapport au récipient d'extraction (10 ; 100), et

(iv) apport de l'extrait ((C∞B)\*\*) débarrassé de raffinat présentant une humidité résiduelle et obtenu par déshumidification à l'extrait ((C∞B)\*\*) débarrassé de raffinat présentant une humidité résiduelle déjà isolé ou à isoler

(v) remplissage du récipient d'extraction (10 ; 100) avec une autre première masse prédéfinie (ΔM) du solvant secondaire (C) après le premier temps de séjour (τ1) selon l'étape (ii), dans lequel l'extraction solide-liquide est poursuivie pendant un deuxième temps de séjour (τ2).

**2.** Procédé selon la revendication 1, **caractérisé en ce que** l'intensification de l'extraction solide-liquide pendant un premier temps de séjour (τ1) est réalisée en outre par inondation au moins partielle du réservoir (12 ; 12.1) sous la forme d'au moins un flux (S1, S2, S3) distribué de façon planifiée et ciblée avec le solvant secondaire (C) ou l'extrait ((C∞B)) respectivement obtenu et/ou par dispersion et maintien en suspension du mélange primaire ((AooB)) à l'intérieur du réservoir (12 ; 12.1) par apport du solvant secondaire (C) ou de l'extrait ((C∞B)) respectivement obtenu par le biais d'un espace de plancher du réservoir (12 ; 12.1) par un quatrième flux (S4) orienté vers le haut.

**3.** Procédé selon l'une des revendications 1 ou 2, **caractérisé en ce que** le déplacement du réservoir (12 ; 12.1) par rapport au récipient d'extraction (10 ; 100) dans l'extrait ((CooB)) respectivement obtenu est réalisé en outre selon un premier mouvement de rotation.

**4.** Procédé selon l'une des revendications 1 à 3,
**caractérisé en ce que**
la déshumidification commence au plus tôt au début du séchage d'une première partie du raffinat présentant une humidité résiduelle (A+) dans le réservoir (12 ; 12.1) restant dans le récipient d'extraction (10 ; 100).

**5.** Procédé selon l'une des revendications 1 à 4,
**caractérisé en ce que**
l'extrait ((C∞B)\*\*) débarrassé de raffinat présentant une humidité résiduelle (A+) et obtenu au total est soumis à un filtrage pour l'isolement de particules indésirables, lesquelles traversent les premiers orifices de passage (13) du réservoir perméable au liquide (12 ; 12.1).

**6.** Procédé selon la revendication 5,
**caractérisé en ce que**
l'extrait ((C∞B)\*\*) débarrassé de raffinat présentant une humidité résiduelle (A+) et obtenu au total est soumis à une séparation dans un champ centrifuge pour une préclarification et devient ainsi un extrait préclarifié ((C∞B)\*).

**7.** Procédé selon l'une des revendications 1 à 6,
**caractérisé en ce que**
une évacuation automatique ou forcée de l'extrait ((C∞B)\*\*) débarrassé de raffinat présentant une humidité résiduelle (A+) est également favorisée par une pression de gaz (p) d'un agent propulseur gazeux (G), lequel sollicite une surface libre (N1 ; N2) de l'extrait ((C∞B)\*\*) débarrassé de raffinat présentant une humidité résiduelle.

**8.** Procédé selon l'une des revendications 1 à 7,
**caractérisé en ce que**
le procédé est mis en œuvre au moyen du récipient d'extraction (10 ; 100), lequel est conçu comme un récipient de réaction homogène fonctionnant de façon discontinue.

**9.** Dispositif (1) de fabrication industrielle d'un extrait par extraction solide-liquide au moyen d'un récipient d'extraction (10 ; 100) du dispositif (1), lequel accueille au moins un réservoir perméable au liquide (12 ; 12.1) pour la réception d'un mélange primaire ((AooB)) constitué d'un solvant primaire solide (A) et d'un composant de transition (B), lequel est configuré pour la mise en contact d'un solvant secondaire (C) avec le mélange primaire ((AooB)) et pour la séparation du résultat d'extraction ainsi produit en un raffinat présentant une humidité résiduelle (A+) et en un extrait ((C∞B)\*\*) débarrassé de raffinat présentant une humidité résiduelle (A+),

• dans lequel le récipient d'extraction (10 ; 100) possède au moins un premier raccord d'arrivée (14) pour l'apport du solvant secondaire (C), si nécessaire un deuxième raccord d'arrivée (16) pour l'apport du mélange primaire ((AooB)) et un raccord (24) pour l'évacuation d'un extrait ((C∞B)\*\*) débarrassé de raffinat présentant une humidité résiduelle (A⁺),

- dans lequel le raccord (24) débouche dans une conduite de décharge (26),
- dans lequel une conduite de circulation (30), laquelle se ramifie en au moins un autre raccord d'arrivée (20, 20.1, 20.2) menant à un espace intérieur du récipient d'extraction (10 ; 100), en aval d'un moyen de transport (32) vu dans la direction d'écoulement, bifurque de la conduite de décharge (26) au niveau d'un premier point de bifurcation (28),
- dans lequel trois autres raccords d'arrivée (20, 20.1, 20.2) sont réalisés dans une tuyauterie (21, 22, 23) correspondante, parmi lesquelles une tuyauterie inférieure (21) débouche sous le réservoir (12 ; 12.1), une tuyauterie supérieure (22) débouche au-dessus de celui-ci et une tuyauterie centrale (23) débouche dans la région circonférentielle de celui-ci,
- dans lequel la tuyauterie supérieure (22) est raccordée de façon alternative ou complémentaire en communication fluidique à une tuyauterie flexible (25a) et la tuyauterie flexible (25a) mène en communication fluidique à une deuxième conduite circulaire (25) disposée dans l'espace de plancher du réservoir (12 ; 12.1), laquelle s'étend radialement du côté intérieur dans l'espace de plancher et sur toute la circonférence de celui-ci et présente, sur son côté supérieur, face à l'espace intérieur du réservoir (12 ; 12.1), plusieurs orifices de sortie disposés de manière à être répartis sur la circonférence de la deuxième conduite circulaire (25),
- dans lequel le récipient d'extraction (10 ; 100) présente un moyen de déplacement (60), lequel est configuré pour déplacer le réservoir (12 ; 12.1) selon un premier mouvement de translation alternatif (T1) et/ou au moins selon un premier mouvement de rotation (R1) à l'intérieur du récipient d'extraction (10 ; 100),
- dans lequel le dispositif (1) possède un moyen de pression (70), lequel est configuré pour comprimer un contenu du réservoir (12 ; 12.1) et
- dans lequel il est prévu un moyen de commande (38), lequel est relié au moins au moyen de déplacement (60) et au moyen de pression (70) par transmission de signal.

**10.** Dispositif selon la revendication 9, **caractérisé en ce qu'**en cas de besoin, le raccord (24) est utilisé pour l'apport du solvant secondaire (C).

**11.** Dispositif selon l'une des revendications 9 ou 10,
**caractérisé en ce que**
la tuyauterie centrale (23) débouche dans une première conduite circulaire (23a) avec des deuxièmes orifices de passage (23b), laquelle entoure le réservoir (12 ; 12.1), dans lequel les deuxièmes orifices de passage (23b) sont tournés vers le réservoir (12 ; 12.1).

**12.** Dispositif selon l'une des revendications 9 à 11,
**caractérisé en ce que**
vu dans la direction d'écoulement, un moyen de filtrage (36) est disposé en aval du premier point de bifurcation (28) dans la conduite d'évacuation (26).

**13.** Dispositif selon la revendication 12,
**caractérisé en ce que**
vu dans la direction d'écoulement, le moyen de filtrage (36) est monté en amont d'un séparateur centrifuge (34).

**14.** Dispositif selon l'une des revendications 9 à 13,
**caractérisé en ce que**
le récipient d'extraction (10 ; 100) est conçu comme un récipient de réaction homogène fonctionnant de façon discontinue.

**15.** Dispositif (1) selon l'une des revendications 9 à 14,
**caractérisé en ce que**
dans la région de son extrémité supérieure, le récipient d'extraction (10 ; 100) présente un troisième raccord d'arrivée (18) pour l'apport d'un gaz de pression (G).

**16.** Dispositif (1) selon l'une des revendications 9 à 15,
**caractérisé en ce que**

le récipient d'extraction (10 ; 100) accueille le plus d'un réservoir (12 ; 12.1)

- dans un agencement en forme de rangée à un axe ou à plusieurs axes ou

• dans un agencement en cercle simple ou en cercles multiples concentriques et respectivement avec ou sans occupation du centre

et le moyen de déplacement (60) est configurée pour apporter une première ou une deuxième énergie mécanique (ME1, ME2) au plus d'un réservoir (12 ; 12.1).

17. Dispositif (1) selon la revendication 16,
**caractérisé en ce que**
dans l'agencement des réservoirs (12 ; 12.1) en forme de rangée, le premier mouvement de translation (T1) du réservoir (12 ; 12.1) individuel se superpose à un deuxième mouvement de translation alternatif (T2), dont la direction (r) est déterminée par la direction de l'axe respectif formé par les axes de symétrie (S) de l'agencement des réservoirs (12 ; 12.1) en forme de rangée à un axe ou à plusieurs axes.

18. Utilisation d'un réservoir dans un dispositif (1) selon l'une des revendications 9 à 17,
**caractérisée en ce que**
le réservoir perméable au liquide (12 ; 12.1) sous la forme d'un réservoir modifié perméable au liquide (12.1) est conçu de manière à former un espace fermé sur lui-même (12.1b) pour l'approvisionnement du mélange primaire ((A∞B)), à travers lequel un passage intérieur (12.1a) s'étend entièrement d'un côté frontal jusqu'à l'autre du réservoir modifié perméable au liquide (12.1).

19. Utilisation selon la revendication 18,
**caractérisée en ce que**
l'espace (12.1b) présente une forme cylindrique annulaire et le passage intérieur (12.1a) s'étend d'un côté frontal jusqu'à l'autre de l'espace (12.1b).

20. Utilisation selon l'une des revendications 18 ou 19 pour la fabrication d'un concentré de thé ((C∞B)).

21. Utilisation du procédé selon l'une des revendications 1 à 8 ou du dispositif (1) selon l'une des revendications 9 à 17, respectivement pour la fabrication d'un concentré de thé ((C∞B)).

**Figur 1**

25 (S4)

25a (S4)

23

S3

"E-F"
**Figur 2**

23a

S3

23

(C∞B)**
C

12; 12.1

23b

(A∞B)

**Figur 4**

D1

D2

T1

R1

12.1a

12.1

12.1b

H

S

T1

R1

12; 12.1

10

**Figur 3a**

12; 121

100

T2

T1

r

S

S

S

S

R1

**Figur 3b**

**Figur 5**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- WO 2011046745 A1
- EP 2837290 A1
- DE 69929220 T2
- US 9923178 W
- CN 20753283 U
- NO 308939 B1
- CN 108654137 A
- CN 106563288 A
- US 5153015 A